# EUROPÄISCHE PATENTSCHRIFT

(11) **EP 3 684 855 B1**
(45) Veröffentlichungstag und Bekanntmachung des Hinweises auf die Patenterteilung: **03.11.2021**
(21) Anmeldenummer: 18759079.9
(22) Anmeldetag: 20.08.2018
(51) Int. Cl.: C08K 3/34, C09D 133/02, C09D 133/26

(54) **KOMPOSITMATERIAL UND SEINE VERWENDUNG**
COMPOSITE MATERIAL AND ITS USE
MATÉRIAU COMPOSITE ET SA UTILISATION

(30) Priorität: 19.09.2017 DE 102017121698
(43) Veröffentlichungstag der Anmeldung: 29.07.2020
(73) Patentinhaber: Fraunhofer-Gesellschaft zur Förderung der angewandten Forschung e.V., 80686 München (DE)
(72) Erfinder: SENGESPEICK, Andreas, 46047 Oberhausen (DE)
(74) Vertreter: Von Rohr Patentanwälte Partnerschaft mbB
(86) Internationale Anmeldenummer: PCT/EP2018/072435
(87) Internationale Veröffentlichungsnummer: WO 2019/057417

(56) Entgegenhaltungen:
- WO-A1-99/23140
- JP-A- H01 292 071
- KR-B1- 101 674 923
- US-A- 4 836 940

## Beschreibung

Die vorliegende Erfindung betrifft das technische Gebiet schaltbarer Kompositmaterialien, insbesondere die Verwendung von schaltbaren Kompositmaterialien in Beschichtungszusammensetzungen zur Herstellung funktionaler Beschichtungen.

Insbesondere betrifft die vorliegende Erfindung ein Kompositmaterial, welches sich zur Herstellung wasserabweisender und wasserdampfdiffusionsoffener Beschichtungen eignet, sowie die Verwendung des Kompositmaterials.

Weiterhin betrifft die vorliegende Erfindung ein Verfahren zur Herstellung eines Kompositmaterials.

Funktionale Beschichtungen zeichnen sich dadurch aus, dass sie üblicherweise im Vergleich zu herkömmlichen Beschichtungen zusätzliche positive Eigenschaften, auch Funktionen genannt, aufweisen. So sollen funktionale Fassadenbeschichtungen Gebäudefassaden nicht nur vor der Witterung schützen, sondern oftmals auch verbesserte Wasserdampfdiffusionsraten aufweisen oder eine verbesserte Wärmedämmung ermöglichen.

Üblicherweise verwendete Fassadenbeschichtungen basieren auf Anstrichen und lassen sich in drei Gruppen einteilen, nämlich Mineralfarben, Kunststoffdispersionsfarben und Silikonharzemulsionsfarben.

Die vorgenannten Beschichtungssysteme stellen nach wie vor die in der Praxis am häufigsten eingesetzten Fassadenfarben dar. Die richtige Auswahl vorausgesetzt, kann mit ihnen fast jede Fassade beschichtet werden.

Zu beachten ist allerdings, dass innerhalb der drei vorgenannten Gruppen noch weitere Feinunterteilungen vorgenommen werden müssen. Während Mineralfarben zumeist ein Silikat- oder Kalkbindemittel aufweisen, gibt es z. B. bei den Kunststoffdispersionsfarben Typen, die auf eine gute Wasserdampfdiffusionsfähigkeit optimiert sind; andere Typen, oft elastische, rissüberbrückende Systeme, weisen dagegen einen höheren Diffusionswiderstand auf.

Bei den Silikonharzemulsionsfarben wiederum unterscheiden sich die verschiedenen Ausführungen sehr stark durch den Anteil des kostspieligeren Silikonharzbindemittels; eine Normung, die einen Mindestsilikonanteil vorschreibt, gibt es nicht.

Für die Formulierung von Silikonharzfarben sind drei Arten von Silikonen bzw. Ausgangsstoffen relevant, welche sich insbesondere durch den Kondensations- bzw. Polymerisationsgrad unterscheiden. Die Wertigkeit der Silikone nimmt bei der Verwendung von niedermolekularen Silanen über Siloxane zu Polysiloxanen, beziehungsweise Silikonharzen, zu. Nur hochwertige Silikonharze ergeben in einer ausgewogenen Verbindung mit einer Polymerdispersion eine echte Silikonharzfarbe. Diese weist gute Wasserdampfdurchlässigkeitswerte auf sowie eine hohe Durchlässigkeit für Kohlendioxid, eine gute Witterungsbeständigkeit und sehr gute wasserabweisende Eigenschaften.

Die Herstellung von Silikonharzfarben ist jedoch mit sehr hohen Kosten verbunden und die Wasserdampfdurchlässigkeit der Silikonharzfarben ist noch verbesserungsfähig, um insbesondere eine rasche Entfeuchtung von Fassaden zu ermöglichen.

Mineralische Farben weisen zwar eine sehr hohe Wasserdampfdurchlässigkeit auf, sind jedoch nicht wasserabweisend, sondern hoch kapillaraktiv und saugen daher flüssiges Wasser auf, welche sie an das Mauerwerk abgeben. Aus diesem Grund sind Mineralfarben in der Regel nur unter Einsatz großer Mengen an Hydrophobierungsmitteln für Außenanwendungen geeignet. Dabei ist es nötig, eine vollständige Kapillarhydrophobierung zu erreichen, was zumeist nur unvollständig gelingt.

Polymerdispersionsfarben hingegen sind oftmals in hohem Maße rissüberbrückend, so dass mechanische Spannungen und Belastungen, wie z. B. Setzrisse, eines Substrates, insbesondere an Gebäudefassaden, ausgeglichen werden können, jedoch sind sie in der Regel wasserabweisend und nur in geringfügigem Maße wasserdampfdurchlässig. Aus diesem Grund besteht bei der Verwendung von Polymerdispersionsfarben stets die Gefahr einer Verfeuchtung der Fassade, was die Bildung von Schimmel und Algen auf dieser begünstigt.

Es wird daher im Stand der Technik stets versucht, in neuartigen Farbstoffformulierungen über spezielle Füllstoffe neue oder verbesserte Funktionalitäten in eine Fassadenbeschichtung einzubringen.

Funktionelle Füllstoffe für Fassadenbeschichtungen werden beispielsweise für folgende Anwendungen eingesetzt:
Die Patentanmeldung WO 2011/132132 A1, korrespondierend zur DE 20 2010 005 960 A1, beschreibt einen funktionalen Putz mit Mikrohohlkugeln, Vermiculit oder Schaumglas als funktionalem Füllstoff zur verbesserten Schallisolation. Insbesondere wird ein mehrschichtiger Aufbau der Beschichtung oder des Putzes empfohlen, um eine optimale Schallabsorption zu erreichen.

Die EP 1 775 272 A2, korrespondierend zur DE 10 2005 048 538 B3, beschreibt einen Putz für den Innenbereich, bei dem auf organische Binderanteile vollständig verzichtet wird, mit einem Vermiculitanteil bis 20 Gew.-%. Der Vorteil dieser Beschichtung wird in dem geringen Wasserdampfdiffusionswiderstand µ gesehen, der um den Faktor 100 kleiner sein soll, als bei Standard-Dispersionsfarben für den Innenbereich. Zugleich wird ein gewisser Anteil an Raumfeuchte in der Beschichtung gespeichert und bei trockener Raumluft wieder abgegeben. Die Regulation der Raumfeuchte in Kombination mit der schnellen Feuchtigkeitsaufnahme und Abgabe durch die funktionelle Beschichtung verhindert dauerhaft jeglichen Schimmelbefall. Vergleichbare Produkte, die Füllstoffe auf Basis von Perliten, Tuffstein oder Blähton enthalten, finden als kapillaraktiver Sanierputz Anwendung und werden unter anderem als Brandschutzputze eingesetzt.

Die WO 2013/117511 A1 steht stellvertretend für die Bemühungen, superhydrophobe Oberflächenbeschichtungen zu entwickeln. Hierfür wird neben dem Einsatz von Hydrophobierungsmitteln auf Basis von Silanen und Silanolen vor allem an einer passenden Oberflächenstrukturierung gearbeitet. Insbesondere werden Calciumcarbonatpartikel mit einer ausgesprochenen Igelstruktur beschrieben, wodurch sich Benetzungswinkel mit Wasser von 140 °C realisieren lassen.

Die CN 103 351 817 A beschreibt eine selbstregulierende energiespeichernde Farbe für den Innen- und Außenbereich. Als Vorteil dieser Farbe wird eine vorteilhafte Wärmeisolation, geringe Wasserabsorption, Brandschutz und Alterungsbeständigkeit genannt. Als aktive Komponente ist Calciumoxid in 8 bis 16 Gewichtsanteilen aufgeführt.

Darüber hinaus kommen im Bausektor auch quellfähige Materialien zum Einsatz. Quellfähige Dichtungsmaterialien finden im Bausektor vor allem Verwendung als Quellbänder für Rohrdurchführungen, Horizontalwassersperren und als Spritzmassen. Hierfür werden als quellfähige Materialien neben sogenannten Superabsorbern und Bentoniten, chemisch modifizierte Polyurethan-Elastomere und Butylkautschuke eingesetzt. Quellgummi auf Basis modifizierter Polyurethane stellen hierbei eine relativ neue Materialklasse dar. Hierbei erfolgt die Quellung über wasserquellfähige Polymerharze auf Polyurethan-Basis, welche mit der Polychloropen-Matrix durch Vulkanisation untrennbar verbunden sind. Ein beim Quellvorgang auftretendes "Herauswaschen" der Quellharze ist somit nicht möglich.

Darüber hinaus beschreibt die CN 103 172 785 B "Superabsorbent selfcrosslinking epoxy acrylate copolymer and its preparation and application" ein Copolymer als Anstrichstoff, welches sich durch eine hohe Wasseraufnahme auszeichnet. Als Anstrichstoff auf Basis des Copolymers unter Zuhilfenahme von porösen Füllstoffen erreicht die Beschichtung eine hohe Wasseraufnahme und Wasserdampfdurchlässigkeit und kann für die Luftfeuchtigkeitsregulation im Innenbereich eingesetzt werden. Die Beschichtung ist jedoch nicht zur Abdichtung als Außenbeschichtung geeignet. Weitere relevante Dokumente sind WO-A-99/23140, JP-A-H01292071, US-A-4836940 und KR-B-101674923.

Insbesondere im Fall von Fassadenbeschichtungen ist der Einfluss auf die Feuchteregulierung des darunter liegenden Mauerwerks bzw. Gebäudes von besonderer Relevanz.

Zwei bauphysikalische Größen bestimmen den Einfluss einer Fassadenbeschichtung auf das Feuchtemanagement eines Gebäudes: Zum einen der Wasseraufnahmekoeffizient, der sogenannte W-Wert, der die Wasseraufnahme einer Beschichtung beschreibt, und zum anderen der Wasserdampfdiffusionswiderstand, der sogenannte µ-Wert, der den Widerstand gegen Wasserdampf in einem Bauteil ausdrückt. Je kleiner die Wasseraufnahme ist, umso besser sind der Feuchte- und Regenschutz. Beheizte Gebäude haben, vor allem im Winter, ein Temperaturgefälle von den Innenräumen nach außen. Warme Luft kann mehr Luftfeuchtigkeit aufnehmen, welche aber in Richtung des Temperaturgefälles nach außen diffundiert und von einer Fassadenbeschichtung, die zum Teil als Dampfbremse fungiert, aufgehalten wird. Dies kann zu einer Verfeuchtung der Fassade und nachfolgend zu unterschiedlichen Schadensbildnern an der Fassade führen, wie beispielsweise die Bildung von Algen und Pilzen oder dem Abplatzen der Fassadenbeschichtung.

Im Stand der Technik wird daher stetig versucht, Fassadenbeschichtungen zu entwickeln, welche zwar einen Schutz von Außen gegenüber eindringender Nässe gewährleisten, andererseits jedoch auch das Trocknen der Fassade ermöglichen.

In der Lackentwicklung für Fassadenfarben wird derzeit versucht, Dispersionsfarben zu entwickeln, bei denen durch den Einsatz von Polysiloxanen und Silanolen eine Kapillarhydrophobierung erzeugt wird, um die andernfalls niedrigen Wasserdampfdiffusionswerte, zu steigern. Mit steigendem Anteil an Polysiloxanen kommt es aber zu einer gesteigerten Anschmutzneigung und Vergrauung der Fassadenoberfläche.

Für den Bautenschutz sind jedoch Fassadenfarben, welche ein ausgeglichenes Wandfeuchtemanagement ermöglichen, von entscheidender Bedeutung. Silikatdispersionsfarben haben den Vorteil einer hohen Wasserdampfdiffusionsrate, aber auch der Nachteil einer hohen kapillaren Wasseraufnahme. Polymeren Dispersionsfarben fehlt eine ausreichende Wasserdampfdurchlässigkeit. Silikonharzfarben erreichen zwar bessere Wasserdampfdiffusionswerte, allerdings sind die erreichten Werte immer noch verbesserungswürdig und die Herstellung von Silikonfarben ist mit hohen Kosten verbunden.

Im Stand der Technik fehlt somit weiterhin ein System, welches die Herstellung von wasserabweisenden und wasserdampfdiffusionsoffenen Beschichtungen ermöglicht.

Insbesondere fehlt es an Systemen, welche wie gängige Anstrichfarben zu verarbeiten sind, jedoch im Vergleich zu diesen erhöhte wasserabweisende Eigenschaften sowie eine hohe Wasserdampfdurchlässigkeit aufweisen.

Auch sind aus dem Stand der Technik weder Beschichtungssysteme noch Additive bekannt, welche unter verschiedensten Anwendungsbedingungen einsetzbar sind und stets gleichbleibend gute Ergebnisse liefern.

Insbesondere sind aus dem Stand der Technik bislang keine Füllstoffe bekannt, welche es ermöglichen würden, an sich bekannte Beschichtungssysteme derart zu modifizieren, dass die Wasserdampfdiffusionsdurchlässigkeit der Beschichtung erhöht und gleichzeitig die wasserabweisenden Eigenschaften der Beschichtung beibehalten oder gar verbessert werden.

Darüber hinaus sind bislang keine Beschichtungssysteme bekannt, welche einfach herzustellen sind und im Vergleich zum Stand der Technik verbesserte Wasserdampfdiffusionsraten sowie verbesserte wasserabweisende Eigenschaften aufweisen.

Es ist somit eine Aufgabe der vorliegenden Erfindung darin zu sehen, ein Material bereitzustellen, welche die zuvor genannten, mit dem Stand der Technik verbundenen Nachteile vermeidet, zumindest jedoch abschwächt.

Insbesondere ist eine Aufgabe der vorliegenden Erfindung darin zu sehen, ein Material bereitzustellen, welches die Wasserdampfdurchlässigkeit von Beschichtungen, insbesondere Fassadenbeschichtungen, verbessert, wobei gleichzeitig die Wasseraufnahmefähigkeit der Beschichtung nicht in erwartetem Maße erhöht wird, d. h. im Vergleich zu bekannten Systemen nicht erhöht wird, sondern die wasserabweisenden Eigenschaften nach Möglichkeit sogar verbessert werden.

Darüber hinaus ist eine weitere Aufgabe der vorliegenden Erfindung, ein Material bereitzustellen, welches sich in eine Vielzahl von Beschichtungen einarbeiten lässt und die Wasserdampfdurchlässigkeit der Beschichtung erhöht, gleichzeitig jedoch der Aufnahme von flüssigem Wasser entgegenwirkt.

Die zuvor genannte Aufgabenstellung wird gemäß einem ersten Aspekt der vorliegenden Erfindung durch ein Kompositmaterial nach Anspruch 1 gelöst; weitere vorteilhafte Ausgestaltungen dieses Erfindungsaspektes sind Gegenstand der diesbezüglichen Unteransprüche.

Weiterer Gegenstand der vorliegenden Erfindung gemäß einem zweiten Aspekt der vorliegenden Erfindung ist die Verwendung eines Kompositmaterials nach Anspruch 14.

Wiederum weiterer Gegenstand der vorliegenden Erfindung gemäß einem dritten Aspekt der vorliegenden Erfindung ist ein Verfahren zur Herstellung eines Kompositmaterials nach Anspruch 15; weitere vorteilhafte Ausgestaltung dieses Erfindungsaspektes sind Gegenstand der diesbezüglichen Unteransprüche.

Es versteht sich von selbst, dass Besonderheiten, Merkmale, Ausgestaltungen, Ausführungsformen sowie Vorteile oder dergleichen, welche nachfolgend - zu Zwecken der Vermeidung unnötiger Wiederholungen - nur zu einem Erfindungsaspekt ausgeführt werden, selbstverständlich im Bezug auf die übrigen Erfindungsaspekte entsprechend gelten, ohne dass dies einer ausdrücklichen Erwähnung bedarf.

Weiterhin versteht es sich von selbst, dass bei der nachfolgenden Angabe von Werten, Zahlen und Bereichen die diesbezüglichen Werte, Zahlen, und Bereichsangaben nicht beschränkend zu verstehen sind; es versteht sich für den Fachmann vielmehr von selbst, dass einzelfallbedingt oder anwendungsbezogen von den angegebenen Bereichen bzw. Angaben abgewichen werden kann, ohne dass der Rahmen der vorliegenden Erfindung verlassen ist.

Zudem gilt, dass alle im Folgenden genannten Werte- bzw. Parameterangaben oder dergleichen grundsätzlich mit genormten bzw. standardisierten oder explizit angegebenen Bestimmungsverfahren oder für den Fachmann auf diesem Gebiet an sich geläufigen Bestimmungsmethoden ermittelt bzw. bestimmt werden können.

Darüber hinaus versteht es sich für den Fachmann von selbst, dass alle gewichts- oder mengenbezogenen Prozentangaben vom Fachmann derart ausgewählt werden, dass in der Summe eigene Prozentangaben resultieren; dies versteht sich jedoch von selbst.

Dies vorausgeschickt, wird im Folgenden die vorliegende Erfindung näher beschrieben.

Gegenstand der vorliegenden Erfindung - gemäß einem **ersten** Aspekt der vorliegenden Erfindung - ist somit ein Kompositmaterial, insbesondere ein schaltbarer Funktionswerkstoff, vorzugsweise Kompositpartikel, aufweisend
(a) ein poröses Trägermaterial, insbesondere poröse Partikel, und
(b) ein quellfähiges Material,

wobei die Poren des porösen Trägermaterials das quellfähige Material enthalten,
wobei das poröse Trägermaterial ein überwiegend offenes Porensystem aufweist,
wobei das quellfähige Material in den Poren des porösen Trägermaterials gebildet wird.

Es ist eine Besonderheit des erfindungsgemäßen Kompositmaterials bzw. der erfindungsgemäßen Kompositpartikel, dass es bzw. sie vorzugsweise eine hohe Wasserdampfdurchlässigkeit besitzt bzw. besitzen, jedoch das quellfähige Material bei Kontakt mit flüssigem Wasser aufquillt und die Poren des Kompositmaterials verschließt, so dass kein weiteres flüssiges Wasser über das Kompositmaterial eindringen kann. Auf diese Weise wird gewährleistet, dass bei Kontakt mit Flüssigkeiten, insbesondere mit Wasser, die Flüssigkeit nicht durch Kapillarwirkung des porösen Kompositmaterials in tiefere Schichten gelangt, sondern nach anfänglicher Wasseraufnahme durch das Kompositmaterial und insbesondere durch das quellfähige Material die Poren des porösen Trägermaterials, welches bevorzugt in Form poröser Partikel vorliegt, durch das aufquellende quellfähige Material verschlossen werden und so der Eintritt weiterer Flüssigkeit, insbesondere weiteren Wassers, verhindert wird.

Insbesondere ermöglicht das erfindungsgemäße Kompositmaterial somit die Herstellung von Beschichtungen, insbesondere von Fassadenbeschichtungen, welche hinsichtlich ihrer Wasserdurchlässigkeit schaltbar ausgebildet sind. Speziell bei Verwendung von sogenannten superabsorbierenden Polymeren (Superabsorbent Polymers, SAPs), wie beispielsweise Polyacrylaten, wird durch die Schaltfähigkeit der Beschichtung, welche das erfindungsgemäße Kompositmaterial enthält, bei Wasserkontakt, beispielsweise durch Schlagregenbeanspruchung, der Wasseraufnahmekoeffizient (W-Wert) der Fassadenbeschichtung minimiert.

Durch den Einsatz von hochporösen Trägermaterialien, insbesondere hochporösen Füllstoffen bzw. Partikeln, können bei Einarbeitung des erfindungsgemäßen Kompositmaterials in Beschichtungen Porensysteme in einer Beschichtung, insbesondere in einer Fassadenbeschichtung, erzeugt werden, so dass die Beschichtungen eine wasserdampfdiffusionsäquivalente Luftschichtdicke (Sd-Wert) von weniger als 0,1 m aufweisen und somit als hochdiffusionsoffen gelten.

Durch die Funktionalisierung des porösen Trägermaterials mit einem quellfähigen Material, insbesondere einem quellfähigen Polymer, wird bei Kontakt mit Flüssigkeit, insbesondere mit Wasser, ein Zuquellen der Poren und somit eine gezielte und reversible Abdichtung erzielt, wohingegen das Kompositmaterial ansonsten in hohem Maße für Wasserdampf durchlässig ist.

Beschichtungszusammensetzungen, insbesondere Anstrichfarben, welche das erfindungsgemäße Kompositmaterial aufweisen, sind somit insbesondere auch für den Außenbereich geeignet und minimieren die kapillare Wasseraufnahme einer Fassade. Durch das Quellen des quellfähigen Materials und den Verschluss der Poren wird verhindert, dass Wasser durch die Poren und die Kapillaren der Fassadenbeschichtung in tiefere Schichten eindringen und zu einer Verfeuchtung der Baumaterialien führen kann.

Durch den Einsatz des erfindungsgemäßen Kompositmaterials als hochporöse, schaltfähige funktionale Werkstoffe, insbesondere Füllstoffe, lassen sich zwei im Widerspruch stehende bauphysikalische Anforderungen, nämlich eine hochdiffusionsoffene Fassadenoberfläche und eine wasserabweisende Wirkung, vereinen.

Fassadenbeschichtungen, welche das erfindungsgemäße Kompositmaterial aufweisen, besitzen wie zuvor bereits angeführt eine Schaltfähigkeit gegenüber flüssigem Wasser, insbesondere gegenüber einer Schlagregenbeanspruchung, und eine minimierte kapillare Wasseraufnahme unter Beibehaltung einer hohen Wasserdampfdiffusionsraten. Insbesondere bei Verwendung von superabsorbierenden Polymeren (SAPs) lässt sich die kapillare Wasseraufnahme (W-Wert) einer diffusionsoffenen Wandfarbe von anfangs mehr als 0,5 kg/m²h^{0,5} auf Gesamtwerte im Bereich von 0,05 bis 0,2 kg/m²h^{0,5} senken, womit eine solche Beschichtung als wasserabweisend gilt. Die Beschichtungen weisen üblicherweise eine wasserdampfdiffusionsäquivalente Luftschichtdicke (Sd-Wert) zwischen 0,01 und 0,1 m auf und sind somit hochdiffusionsoffen.

Im Stand der Technik werden wasserdampfdiffusionsoffene und wasserabweisende Beschichtungen oftmals durch Dispersionsfarben erzeugt, welche durch den Einsatz von Polysiloxanen und Silanolen kapillarhydrophobiert sind, um die Wasserdampfdiffusionswerte, welche andernfalls niedrig ausfallen würden, zu steigern. Die so erzielten Beschichtungen sind jedoch oftmals nicht in gewünschtem Maße leistungsfähig, kostspielig in der Herstellung sowie nur begrenzt einsetzbar.

Im Rahmen der vorliegenden Erfindung ist es nunmehr gelungen, ein Material bereitzustellen, welches das Feuchtemanagement von Gebäuden gezielt verbessern kann.

Darüber hinaus sind die erfindungsgemäßen Kompositmaterialien, insbesondere die Kompositpartikel, in einer Vielzahl von Beschichtungen einsetzbar und erhöhen jeweils die Wasserdampfdurchlässigkeit der Beschichtungen unter zumindest Beibehaltung der inhärenten wasserabweisenden Eigenschaften der Beschichtung. Auch werden die mechanischen Eigenschaften der Beschichtungen bei Verwendung des erfindungsgemäßen Kompositmaterials nicht negativ beeinflusst.

Insbesondere können die erfindungsgemäßen Kompositpartikel in Kunststoffdispersionsfarben oder Silikonharzemulsionsfarben eingesetzt werden, um deren Wasserdampfdurchlässigkeit zu verbessern.

Unter einem quellfähigen Material ist im Rahmen der vorliegenden Erfindung insbesondere ein Material zu verstehen, welches durch Absorption, d. h. Aufnahme, von Flüssigkeit, insbesondere von flüssigem Wasser, sein Volumen vergrößert. Die Volumenänderung erfolgt dabei reversibel, wobei die Volumenabnahme vorzugsweise unter Abgabe der zuvor absorbierten Flüssigkeit, insbesondere des Wassers, in Gasform, insbesondere als Wasserdampf, erfolgt.

Gemäß einer bevorzugten Ausführungsform der vorliegenden Erfindung liegt das Kompositmaterial partikelförmig, d. h. in Form von Kompositpartikeln, vor. Durch die Verwendung von partikelförmigen Kompositmaterialien, insbesondere Kompositpartikeln, lässt sich das erfindungsgemäße Kompositmaterial in hervorragender Weise in einer Vielzahl von Beschichtungen bzw. Beschichtungszusammensetzungen einarbeiten.

Wenn im Rahmen der vorliegenden Erfindung das Kompositmaterial in Form von Kompositpartikeln vorliegt, so hat es sich bewährt, wenn die Kompositpartikel Partikelgrößen im Bereich von 0,5 µm bis 5 mm, insbesondere 0,5 µm bis 1 mm, vorzugsweise 1 bis 500 µm, bevorzugt 1 µm bis 200 µm, besonders bevorzugt 2 bis 100 µm, ganz besonders bevorzugt 3 bis 80 µm, insbesondere bevorzugt 5 bis 30 µm, aufweisen. Mit den vorgenannten Partikelgrößen lassen sich besonders dünnschichtige Beschichtungen erzeugen, wobei gleichzeitig auch eine hohe Beladungsdichte der Oberfläche eines Substrates mit den Kompositpartikeln in einer Bindemittelmatrix erreicht werden kann, woraus eine hohe Wasserdampfdiffusionsrate der Beschichtung resultiert.

Wie zuvor bereits dargelegt, wird im Rahmen der vorliegenden Erfindung ein poröses Trägermaterial, insbesondere poröse Partikel, als Basismaterial für das erfindungsgemäße Kompositmaterial verwendet. Im Rahmen der vorliegenden Erfindung werden besonders gute Ergebnisse erhalten, wenn das poröse Trägermaterial eine Porosität im Bereich von 20 bis 99 %, insbesondere 25 bis 98 %, vorzugsweise 30 bis 98 %, aufweist. Unter der Porosität im Rahmen der vorliegenden Erfindung ist das Verhältnis des Porenvolumens, auch Hohlraumvolumen genannt, des porösen Trägermaterials zu dem Gesamtvolumen des porösen Trägermaterials zu verstehen. Die Porosität der erfindungsgemäßen Kompositpartikel bzw. des Trägermaterials in Prozent kann dabei insbesondere durch Quecksilberporosimetrie oder durch Berechnung nach dem BET-Modell oder als Ölzahl bestimmt werden.

Eine hohe Porosität der Trägermaterialien ist bevorzugt, um hohe Wasserdampfdiffusionsraten des Kompositmaterials zu gewährleisten.

Im Rahmen der vorliegenden Erfindung hat das poröse Trägermaterial ein überwiegend offenes Porensystem, d. h. eine überwiegend offene Porosität. Das poröse Trägermaterial weist ein offenes Porensystem auf, d. h. die Poren des porösen Trägermaterials sind zumindest zum überwiegenden Teil, vorzugsweise nahezu ausschließlich, aus offenen Poren gebildet . Unter offenen Poren sind dabei die Poren des porösen Trägermaterials zu verstehen, welche in unmittelbarem Kontakt mit der Umgebung stehen, wohingegen sich geschlossene Poren im Inneren des Trägermaterials befinden und vollständig von dem Trägermaterial umhüllt werden, so dass kein unmittelbarer Kontakt zur Umgebung vorhanden ist und folglich kein Materieaustausch mit der Umgebung erfolgen kann. Unter offener Porosität ist insbesondere der Anteil an der gesamten Porosität zu verstehen, welcher durch offene Poren gebildet wird.

Ein offenes Porensystem, insbesondere ein hoher Anteil an offenen Poren, des porösen Trägermaterials, ist dabei besonders vorteilhaft, da hierdurch besonders hohe Wasserdampfdiffusionsraten erzielt werden können.

Besonders bevorzugt wird es in diesem Zusammenhang, wenn mindestens 50 %, insbesondere mindestens 60 %, vorzugsweise mindestens 70 %, des Gesamtporenvolumens des porösen Trägermaterials durch offene Poren gebildet wird.

Gleichfalls werden besonders gute Ergebnisse erhalten, wenn 50 bis 100 %, insbesondere 60 bis 99 %, vorzugsweise 70 bis 98 %, des Gesamtporenvolumens des porösen Trägermaterials durch offene Poren gebildet wird.

Was nun die Porengröße der Poren des porösen Trägermaterials anbelangt, so kann diese naturgemäß in weiten Bereichen variieren. Es hat sich jedoch bewährt, wenn das poröse Trägermaterial Poren mit Porengrößen im Bereich von 10 nm bis 2 µm, insbesondere 15 nm bis 1,5 µm, vorzugsweise 20 nm bis 1,3 µm, bevorzugt 25 nm bis 1 µm, aufweist. Porengrößen im vorgenannten Bereich erlauben einerseits eine gute Wasserdampfdurchlässigkeit und hohe Wasserdampfdiffusionsraten und werden nicht bereits durch die Einlagerung des quellfähigen Materials verstopft, sind jedoch andererseits eng genug, dass das quellfähige Material bei Aufnahme von flüssigem Wasser die Poren verschließen kann. Die Bestimmung der Porengröße kann dabei im Rahmen der vorliegenden Erfindung durch dem Fachmann an sich geläufige Methoden, insbesondere beispielsweise durch Quecksilberporosimetrie oder nach dem BET-Modell erfolgen.

Gemäß einer bevorzugten Ausführungsform der vorliegenden Erfindung weist das poröse Trägermaterial ein Porenvolumen von 0,4 bis 1,0 ml/g, insbesondere 0,5 bis 0,9 ml/g, vorzugsweise 0,6 bis 0,8 ml/g, auf.

Gemäß einer bevorzugten Ausführungsform der vorliegenden Erfindung ist das poröse Trägermaterial ein Füllstoff, insbesondere ein mineralischer Füllstoff, oder eine Mischung von Füllstoffen. Wenn das Trägermaterial ein hochporöser Füllstoff, insbesondere ein hochporöser Füllstoff, oder eine Mischung von Füllstoffen ist, kann das erfindungsgemäße Kompositmaterial bzw. können insbesondere die erfindungsgemäßen Kompositpartikel einfach gängigen Beschichtungssystemen als Füllstoffe zugesetzt werden. Insbesondere können durch die erfindungsgemäßen Kompositpartikel Anteile herkömmlicher Füllstoffe in Beschichtungszusammensetzungen ersetzt werden, so dass durch die Verwendung der erfindungsgemäßen Kompositpartikel zwar die Wasserdampfdiffusionsrate erhöht, die wasserabweisenden Eigenschaften der Beschichtungen jedoch entweder verbessert oder zumindest beibehalten werden, während die mechanischen Eigenschaften der Beschichtungen üblicherweise unverändert bleiben.

Wenn im Rahmen der vorliegenden Erfindung ein mineralischer Füllstoff als poröses Trägermaterial verwendet wird, so ist der mineralische Füllstoff üblicherweise ausgewählt aus Kieselsäuren, insbesondere pyrogener Kieselsäure, Xerogelen, insbesondere Kieselgelen, Kieselgur, Zeoliten, Aerogelen, Perlit, Tuffstein, Blähton, Vermiculit sowie weiteren Schichtsilikaten, wie beispielsweise Bentonit bzw. Kaolinit, sowie deren Mischungen.

Besonders gute Ergebnisse werden in diesem Zusammenhang erhalten, wenn der mineralische Füllstoff ausgewählt ist aus Kieselsäuren, insbesondere pyrogener Kieselsäure, Kieselgelen, Kieselgur und deren Mischungen, vorzugsweise pyrogener Kieselsäure, Kieselgelen und deren Mischungen.

Was nun die Beladung des porösen Trägermaterials mit dem quellfähigen Material anbelangt, so kann diese in Abhängigkeit von den jeweiligen Anforderungen in weiten Bereichen variieren. Der Beladungsgrad des porösen Trägermaterials mit dem quellfähigen Material wird jedoch vorzugsweise derart eingestellt, dass das quellfähige Material in gequollenen Zuständen nicht aus den Poren des Trägermaterials herausquillt und so beispielsweise die mechanischen Eigenschaften der Beschichtung negativ beeinflusst. Besonders gute Ergebnisse werden im Rahmen der vorliegenden Erfindung erhalten, wenn das poröse Trägermaterial einen Beladungsgrad mit dem quellfähigen Material im Bereich von 0,05 bis 0,5, insbesondere 0,08 bis 0,4, vorzugsweise 0,10 bis 0,30, aufweist. Der Beladungsgrad ist dabei insbesondere als Quotient aus der Masse des quellfähigen Materials im ungequollenen Zustand zur Masse des porösen Trägermaterials, insbesondere des Füllstoffs, definiert.

Wenn als quellfähiges Material ein superabsorbierendes Polymer (SAP) verwendet wird, welches in Gegenwart des porösen Trägermaterials und insbesondere in dessen Poren gebildet wird, so hat es sich bewährt, wenn der Beladungsgrad des Trägermaterials mit der Monomerlösung zur Herstellung des quellfähigen Materials im Bereich von 0,2 bis 3, insbesondere 0,4 bis 2,5, vorzugsweise 0,5 bis 2, variiert wird. Mit den vorgenannten gewichtsbezogenen Verhältnissen von Monomerlösungen zu porösem Trägermaterial lässt sich im Allgemeinen einerseits eine ausreichend hohe Beladung des porösen Trägermaterials mit dem Polymer erzielen, um einen Verschluss der Poren zu ermöglichen, wobei die Beladung andererseits ausreichend gering ist, um eine hohe Wasserdampfdurchlässigkeit zu erzielen.

Vorzugsweise erfolgt die Beladung des porösen Trägermaterials mit quellfähigem Material bzw. die Bildung des quellfähigen Materials in den Poren des Trägermaterials, in zumindest teilgequollenen Zustand. Auf diese Weise wird gewährleistet, dass nicht eine zu große Menge quellfähiges Material in den Poren des porösen Trägermaterials eingelagert wird und die Poren des Trägermaterials bereits in nichtgequollenem Zustand verstopft.

Wie zuvor bereits ausgeführt, ist es im Rahmen der vorliegenden Erfindung üblicherweise vorgesehen, dass das quellfähige Material durch Aufnahme einer Flüssigkeit, insbesondere von flüssigem Wasser, quillt.

Was nun die Volumenzunahme des quellfähigen Materials durch die Absorption von Flüssigkeit, insbesondere Wasser, anbelangt, so kann diese gleichfalls in weiten Bereichen variieren. Es hat sich jedoch bewährt, wenn das Volumen des quellfähigen Materials während des Quellvorgangs, bezogen auf das Volumen des nichtgequollenen quellfähigen Materials, mindestens um den Faktor 0,5, insbesondere mindestens um den Faktor 1, vorzugsweise mindestens um den Faktor 2, bevorzugt mindestens um den Faktor 3, zunimmt.

Gleichfalls hat es sich bewährt, wenn das Volumen des quellfähigen Materials, bezogen auf das Volumen des nichtgequollenen quellfähigen Materials, während des Quellvorgangs um den Faktor 0,5 bis 10, insbesondere 1 bis 8, vorzugsweise 2 bis 7 , bevorzugt 3 bis 6, zunimmt.

Als Ausgangswert für das nichtgequollene quellfähige Material wird dabei das Volumen des quellfähigen Materials in nichtgequollenem Zustand unter Normalbedingungen gemäß DIN ISO 291:2008-08, d. h. bei 23 °C, einer Luftfeuchte von 65 % und einem Luftdruck zwischen 0,86 bar und 1,06 bar, verwendet.

Besonders gute Ergebnisse werden im Rahmen der vorliegenden Erfindung erhalten, wenn das quellfähige Material einen Quellgrad von 1 bis 10, insbesondere 1 bis 8, vorzugsweise 1,5 bis 7, bevorzugt 2 bis 6, aufweist. Unter dem Quellgrad des quellfähigen Materials ist dabei im Rahmen der vorliegenden Erfindung der Quotient aus der Masse des gequollenen Polymers, insbesondere des aufgenommenen Wassers, zu der Masse des nichtgequollenen quellfähigen Materials zu verstehen.

Was nun die Auswahl des quellfähigen Materials anbelangt, so können sämtliche geeignete Materialien ausgewählt werden, wobei dem Fachmann geeignete Materialien an sich bekannt sind. Insbesondere ist es möglich, dass das quellfähige Material ausgewählt ist aus natürlichen Polymeren, synthetischen Polymeren, mineralischen Substanzen und deren Mischungen. Besonders gute Ergebnisse werden in diesem Zusammenhang erhalten, wenn das quellfähige Material ausgewählt ist aus natürlichen und synthetischen Polymeren sowie deren Mischungen, vorzugsweise synthetischen Polymeren. Besonders gute Ergebnisse werden im Rahmen der vorliegenden Erfindung erhalten, wenn superabsorbierende Polymere (Superabsorbent Polymers, SAPs), sogenannte Superabsorber, verwendet werden.

Falls im Rahmen der vorliegenden Erfindung ein synthetisches Polymer ausgewählt wird, so hat es sich bewährt, wenn das synthetische Polymer ausgewählt ist aus (Meth)acrylaten, Poly(meth)acrylsäure, Salzen der Po-ly(meth)acrylsäure, Polyacrylamid, Polyalkoholen sowie deren Co- und Terpolymeren und Mischungen. Insbesondere werden synthetische Polymere bevorzugt, welche in Gegenwart von Vernetzern hergestellt oder nach ihrer Herstellung zusätzlich vernetzt werden. Als Vernetzer können in diesem Zusammenhang insbesondere Diacrylatester, Allylmethacrylate, Triallylamine, Tetraallyloxyethane sowie mehrfunktionale Vinyl-Monomere eingesetzt werden.

Wie zuvor bereits ausgeführt werden besonders gute Ergebnisse im Rahmen der vorliegenden Erfindung erhalten, wenn das quellfähige Material ein sogenanntes superabsorbierendes Polymer ist.

Im Rahmen der vorliegenden Erfindung ist es üblicherweise vorgesehen, dass die Kompositpartikel eine Schüttdichte im Bereich von 500 bis 1.500 g/l, insbesondere 600 bis 1.250 g/l, vorzugsweise 750 bis 1.100 g/l, bevorzugt 800 bis 1.000 g/l, aufweisen.

Es zeigen die Figurendarstellungen gemäß
- Fig. 1: den schematischen Aufbau eines erfindungsgemäßen Kompositpartikels mit quellfähigem Material in nichtgequollenem Zustand;
- Fig. 2: eine schematische Darstellung eines erfindungsgemäßen Kompositpartikels mit quellfähigem Material in gequollenem Zustand;
- Fig. 3: eine schematische Darstellung eines erfindungsgemäß funktionalisierten Beschichtungssystems;
- Fig. 4: eine lichtmikroskopische Aufnahme in 500facher Vergrößerung einer erfindungsgemäß funktionalisierten Beschichtung im trockenen Zustand und
- Fig. 5: eine lichtmikroskopische Aufnahme in 500facher Vergrößerung einer erfindungsgemäß funktionalisierten Beschichtung nach Behandlung mit gefärbtem Wasser.

Weiterer Gegenstand der vorliegenden Erfindung - gemäß einem **zweiten** Aspekt der vorliegenden Erfindung - ist die Verwendung eines Kompositmaterials, insbesondere von Kompositpartikeln, wie zuvor beschrieben in Beschichtungen, insbesondere in Fassadenbeschichtungen, Korrosionsschutzbeschichtungen, Anti-Eis-Beschichtungen und/oder in Holzschutzbeschichtungen.

Die zuvor beschriebenen Kompositmaterialien eignen sich in hervorragender Weise zur Einarbeitung in sämtliche Beschichtungssysteme, welche zur Feuchteregulierung eines Untergrundes verwendet werden. Neben den bereits beschriebenen wasserabweisenden und wasserdampfdiffusionsoffenen Fassadenbeschichtungen, eignen sich Kompositmaterialien insbesondere auch zur Einarbeitung in Korrosionsschutzbeschichtungen, da eine ausgeglichene Feuchtigkeit in der Farbschicht die Bildung von Tauwasser bei Temperaturunterschieden in der Beschichtung vermeidet und die Korrosionsschutzbeschichtungen somit vor Beschädigung schützt.

Die Kompositmaterialien können auch erfolgreich in Anti-Eis-Beschichtungen eingesetzt werden, da durch die Aufnahme von Oberflächenfeuchtigkeit die Eisbildung auf der Beschichtung verzögert und unter Umständen verhindert werden kann.

Auch in Holzschutzbeschichtungen, insbesondere Holzschutzlacken, können die Kompositpartikel erfolgreich eingesetzt werden, da eine so modifizierte Beschichtung den Feuchtegehalt des Holzes konstant hält und somit das Entstehen von Spannungen durch Schrumpfung oder Quellung des Holzuntergrundes unterbindet.

Gegenstand der Erfindung ist somit auch die Verwendung eines Kompositmaterials, insbesondere von Kompositpartikeln, wie zuvor beschrieben, zur Regulierung des Feuchtehaushaltes von Substraten durch Beschichtung.

Für weitere Einzelheiten zu diesem Erfindungsaspekt kann auf die obigen Ausführungen zu dem erfindungsgemäßen Kompositmaterial verwiesen werden, welches in Bezug auf die erfindungsgemäße Verwendung entsprechend gelten.

Weiterer Gegenstand der vorliegenden Erfindung - gemäß einem **dritten** Aspekt der vorliegenden Erfindung - ist ein Verfahren zur Herstellung eines Kompositmaterials, insbesondere von Kompositpartikeln, wobei
(a) in einem ersten Verfahrensschritt ein poröses Trägermaterial vorgelegt wird und
(b) in einem auf den ersten Verfahrensschritt (a) folgenden zweiten Verfahrensschritt ein quellfähiges Material in die Poren des porösen Trägermaterials eingebracht und/oder in den Poren des porösen Trägermaterials gebildet wird.

Das quellfähige Material wird direkt in den Poren des porösen Trägermaterials Z synthetisiert. Dies bietet sich insbesondere dann an, wenn das quellfähige Material ein synthetisches Polymer ist, wie beispielsweise ein superabsorbierendes Polymer.

Gemäß einer bevorzugten Ausführungsform der vorliegenden Erfindung wird in Verfahrensschritt (a) das poröse Trägermaterial in loser Schüttung oder als Dispersion vorgelegt. Im Rahmen der vorliegenden Erfindung wird es bevorzugt, wenn das poröse Trägermaterial in loser Schüttung, d. h. in Form eines Pulverbettes, vorgelegt wird und anschließend mit dem quellfähigen Material in Kontakt gebracht wird. Der Einsatz des porösen Trägermaterials, insbesondere der porösen Partikel, als Pulverbett oder als Pulverschüttung besitzt den Vorteil, dass die Porensysteme des porösen Trägermaterials frei zugänglich sind für die Lösungen oder Dispersionen, welche das quellfähige Material oder dessen Präkursoren enthalten.

Es ist jedoch auch möglich, dass das poröse Trägermaterial in Form einer Dispersion vorgelegt wird und anschließend beispielsweise die Reaktanden zur Herstellung eines quellfähigen Materials zu der Dispersion hinzugegeben werden.

Im Rahmen der vorliegenden Erfindung ist es üblicherweise vorgesehen, dass die Dispersion ein flüssiges Dispersionsmittel enthält. Wenn in dem ersten Verfahrensschritt (a) das poröse Trägermaterial somit in Form einer Dispersion vorgelegt wird, so wird das üblicherweise feste poröse Trägermaterial in einem flüssigen Dispersionsmittel bzw. Dispersionsmedium vorgelegt, so dass eine Fest-in-flüssig-Dispersion erhalten wird. Unter einer Dispersion ist im Rahmen der vorliegenden Erfindung insbesondere ein heterogenes Gemisch aus mindestens zwei Stoffen zu verstehen, welche sich nicht oder kaum ineinander lösen oder chemisch miteinander verbinden und somit ein Zweiphasengemisch bilden. Dabei liegen üblicherweise ein oder mehrere Stoffe, die sogenannte disperse Phase oder auch dispergierte Phase, feinverteilt in einem anderen kontinuierlichen Stoff, dem sogenannten Dispersionsmedium oder Dispersionsmittel, vor. Die im Rahmen der vorliegenden Erfindung bevorzugt eingesetzten Fest-in-flüssig-Dispersionen werden auch als Suspensionen bezeichnet.

Gemäß einer bevorzugten Ausführungsform der vorliegenden Erfindung, wird in Verfahrensschritt (b) das quellfähige Material oder werden Präkursoren des quellfähigen Materials in flüssiger Form zu dem porösen Trägermaterial hinzugegeben, insbesondere als Lösung oder Dispersion.

Besonders bewährt hat es sich in diesem Zusammenhang, wenn das gleiche Lösungs- oder Dispersionsmittel verwendet wird, welches auch in Verfahrensschritt (a) verwendet wird. Bei einem im Rahmen der vorliegenden Erfindung bevorzugt verwendeten Lösungs- bzw. Dispersionsmittel handelt es sich um Wasser, da durch die Verwendung von Wasser das quellfähige Material in gequollenem Zustand in die Poren des Trägermaterials eingebracht bzw. dort synthetisiert wird, wodurch gewährleistet wird, dass nach Entfernen des Lösungs- bzw. Dispersionsmittels aus dem quellfähigen Material das Porensystem des porösen Trägermaterials nicht zugesetzt ist, sondern insbesondere für Wasserdampf durchlässig bleibt.

Besonders gute Ergebnisse werden im Rahmen der vorliegenden Erfindung erhalten, wenn in Verfahrensschritt (a) das poröse Trägermaterial vorgelegt und flüssige Lösungen oder Dispersionen eines quellfähigen Polymers oder einer Monomerlösung langsam hinzugegeben werden, um eine möglichst gleichmäße Beladung des porösen Trägermaterials mit dem quellfähigen Material zu gewährleisten. Bei Einsatz von Monomerlösungen werden diese im Anschluss polymerisiert, beispielsweise durch nachgeschaltete radikalische Polymerisation. Insbesondere durch die Verwendung von Monomerlösungen ist es möglich, die inneren Poren des porösen Trägermaterials möglichst gleichmäßig mit dem quellfähigen Material zu beschichten.

Besonders gute Ergebnisse werden in diesem Zusammenhang erhalten, wenn die eingesetzte Monomerlösung 60 bis 95 Gew.-%, vorzugsweise 70 bis 90 Gew.-%, Löse- oder Dispersionsmittel, vorzugsweise Wasser, bezogen auf die Monomerlösung, enthält.

Im Rahmen der vorliegenden Erfindung wird vorzugsweise ein quellfähiges Material in Form eines superabsorbierenden Polymers (Superabsorbent Polymer, SAP) in den Poren des porösen Trägermaterials synthetisiert. Besonders gute Ergebnisse werden dabei erhalten, wenn - wie zuvor bereits ausgeführt - acrylatbasierte superabsorbierende Polymere hergestellt werden. Insbesondere hat es sich bewährt, wenn superabsorbierende Polymere auf Basis von Acrylsäure mit N,N'-Methylenbisacrylamid als Vernetzer synthetisiert werden. Wenn im Rahmen der vorliegenden Erfindung mit einer Monomerlösung gearbeitet wird, um ein quellfähiges Material in den Poren des porösen Trägermaterials zu erzeugen, so hat es sich bewährt, wenn die das Monomer enthaltende Lösung einen Anteil von 1 bis 10 Mol-%, insbesondere 2 bis 8 Mol-%, vorzugsweise 3 bis 7 Mol-%, bevorzugt 4 bis 6 Mol-%, an Monomeren, bezogen auf die Gesamtstoffmenge der Lösung, aufweist.

Darüber hinaus werden im Rahmen der vorliegenden Erfindung gute Ergebnisse erhalten, wenn die Monomerlösung weiterhin mindestens einen Vernetzer enthält. Wenn die Monomerlösung einen Vernetzer enthält, so enthält die Monomerlösung den Vernetzer vorzugsweise in Mengen von 0,1 bis 10 Mol-%, vorzugsweise 0,5 bis 8 Mol-%, vorzugsweise 1 bis 7 Mol-%, bevorzugt 2,5 bis 6 Mol-%, bezogen auf die Gesamtstoffmenge der Monomerlösung. Als Vernetzer eignen sich insbesondere die zuvor genannten Verbindungen und Verbindungsklassen.

Falls superabsorbierende Polymere auf Basis von Acrylsäure hergestellt werden, so wird es bevorzugt, wenn ein Neutralisationsgrad von 0 % eingestellt wird.

Durch Herstellung von superabsorbierenden Polymeren unter den zuvor genannten Bedingungen ist es möglich, die Poren des porösen Trägermaterials derart zu belegen, dass das quellfähige Material nicht aus dem porösen Trägermaterial herausquillt. Darüber hinaus kann es sein, dass nach Zugabe der Monomerlösung zu dem porösen Trägermaterial eine weitere Lösung oder Dispersion hinzugegeben wird, welche mindestens einen Starter zur Initiierung der Polymerisierungsreaktion aufweist, um die Polymerisierung zu initiieren.

Die Verwendung von Dispersionen oder Lösungen sowohl zur Herstellung des quellfähigen Materials als auch zur Einlagerung in die Poren des Trägermaterials ermöglicht eine sehr schnelle Durchmischung und gleichmäßige Verteilung des quellfähigen Materials bzw. der Präkusoren in den Poren des porösen Trägermaterials.

Im Rahmen der vorliegenden Erfindung kann es darüber hinaus vorgesehen sein, dass in einem auf den zweiten Verfahrensschritt (b) folgenden dritten Verfahrensschritt (c) das mit dem quellfähigen Material beladene Trägermaterial isoliert, gegebenenfalls nachfolgend gewaschen und anschließend getrocknet wird. Das beladene Trägermaterial kann insbesondere durch sämtliche dem Fachmann an sich geläufigen Techniken isoliert werden, beispielsweise durch Filtration, Siebverfahren oder destillative Entfernung des Löse- oder Dispersionsmittels, wobei aufgrund der einfachen Durchführung Filtrations- und Siebverfahren bevorzugt sind.

Durch das Waschen des isolierten beladenen Trägermaterials können nicht erwünschte Reaktionsrückstände bzw. nicht umgesetzte Monomerlösungen oder Additive von den Kompositmaterialien entfernt werden. Zum Waschen wird üblicherweise das für die Reaktion verwendete Löse- oder Dispersionsmittel verwendet.

Wenn das isolierte Kompositmaterial getrocknet wird, so hat es sich bewährt, wenn das Kompositmaterial bei Temperaturen im Bereich von 20 bis 100 °C, insbesondere 30 bis 90 °C, vorzugsweise 40 bis 80 °C, bevorzugt 50 bis 70 °C, getrocknet wird.

Für weitergehende Einzelheiten zu dem erfindungsgemäßen Verfahren kann auf die obigen Ausführungen zu dem erfindungsgemäßen Kompositmaterial und seiner Verwendung verwiesen werden, welche in Bezug auf das erfindungsgemäße Verfahren zur Herstellung des Kompositmaterials entsprechend gelten.

Das zuvor beschriebene Kompositmaterial bzw. die beschriebenen Kompositpartikel, eignet bzw. eignen sich hervorragend für Beschichtungszusammensetzungen zur Herstellung von Funktionsbeschichtungen, vorzugsweise wasserabweisenden diffusionsoffenen Beschichtungen.

Insbesondere enthält eine Beschichtungszusammensetzung zur Herstellung einer Funktionsbeschichtung, vorzugsweise einer wasserabweisenden diffusionsoffenen Beschichtung, vorzugsweise
(A) ein Kompositmaterial, insbesondere Kompositpartikel, wie zuvor beschrieben, und
(B) ein Bindemittel.

Was nun die Menge anbelangt, in welcher die Beschichtungszusammensetzung des Kompositmaterial enthält, so kann diese naturgemäß in weiten Bereichen variieren. Es hat sich jedoch bewährt, wenn die Beschichtungszusammensetzung das Kompositmaterial in Mengen von 5 bis 60 Gew.-%, insbesondere 7 bis 50 Gew.-%, vorzugsweise 10 bis 40 Gew.-%, bevorzugt 15 bis 25 Gew.-%, bezogen auf die Beschichtungszusammensetzung, enthält.

Gleichermaßen kann es vorgesehen sein, dass die Beschichtungszusammensetzung das Bindemittel in Mengen von 5 bis 50 Gew.-%, insbesondere 7 bis 40 Gew.-% , vorzugsweise 10 bis 30 Gew.-%, bevorzugt 15 bis 35 Gew.-%, bezogen auf die Beschichtungszusammensetzung, enthält.

Besonders gute Ergebnisse werden erhalten, wenn das Bindemittel ein Polymer oder eine Mischung von Polymeren ist. In diesem Zusammenhang hat es sich bewährt, wenn das Bindemittel ein organisches Polymer ist oder eine Mischung organischer Polymere.

In diesem Zusammenhang wird es bevorzugt, wenn das Polymer ausgewählt ist aus Polyurethanen, Polystyrolen, Polyvinylacetaten, Polyvinylestern und/oder Polyacrylaten sowie deren Mischungen und Copolymeren. Besonders bevorzugt wird es in diesem Zusammenhang, wenn das Polymer ein Vinylacetat-Ethylen-Acrylat-Copolymer, ist.

Bevorzugte Bindersysteme wiesen einen sauren pH-Wert auf, wie z. B. Vinylacetat-Ethylen-Acrylat-Copolymere. In derartige Binder bzw. Bindemittelsysteme lassen sich die übleicherweise oberflächlich sauren Füllstoffe leicht einarbeiten, ohne dass es zum Nachquellen der Superabsorber in der Compositpartikeln kommt oder dass die Binder flockulieren. Vinylacetat-Ethylen-Acrylat-Copolymere erhalten die Schaltbarkeit der Kompositpartikel und ermöglichen eine schnelle Abdichtung der Beschichtung. Zudem zeichnen sich Bindemittel auf Basis von Vinylacetat-Ethylen-Acrylat-Copolymeren üblicherweise durch besonders geringe Anteile an flüchtigen organischen Verbindungen (Volatile Organic Compounds, VOCs) aus.

In diesem Zusammenhang kann es vorgesehen sein, dass die Beschichtungszusammensetzung einen pH-Wert im Bereich von 3 bis 6, insbesondere 4 bis 5, aufweist.

Was nun die Mindestfilmbildungstemperatur (MFT) des in der Beschichtungszusammensetzung verwendeten Polymers anbelangt, so kann diese in Abhängigkeit von den jeweiligen Anforderungen in weiten Bereichen variieren. Es hat sich jedoch bewährt, wenn das Polymer eine niedrige Mindestfilmbildungstemperatur im Bereich von -40 bis 20 °C, vorzugsweise -20 bis 10 °C, bevorzugt -10 bis 0 °C, aufweist. Polymere mit den zuvor genannten Mindestfilmbildungstemperaturen erlauben einerseits vielfältige Möglichkeiten der Applikation, andererseits ermöglicht sie jedoch auch die Bildung einer gleichmäßigen geschlossenen Beschichtung.

Im Allgemeinen liegt die Beschichtungszusammensetzung in Form einer Dispersion, insbesondere einer Fest-in-flüssig-Dispersion, vor.

Wenn die Beschichtungszusammensetzung in Form einer Dispersion vorliegt, so ist es üblicherweise vorgesehen, dass die Beschichtungszusammensetzung ein Dispersionsmittel aufweist. Besonders gute Ergebnisse werden dabei erhalten, wenn die Beschichtungszusammensetzung das Dispersionsmittel in Mengen von 20 bis 80 Gew.-%, insbesondere 30 bis 70 Gew.-%, vorzugsweise 35 bis 60 Gew.-%, bevorzugt 40 bis 50 Gew.-%, bezogen auf die Beschichtungszusammensetzung, aufweist.

Das Dispersionsmittel kann dabei in Abhängigkeit von den jeweiligen Anforderungen aus Wasser oder gängigen organischen Lösemitteln ausgewählt werden oder aus Mischungen von Wasser und organischen Lösemitteln. Bevorzugt wird als Dispersionsmittel jedoch Wasser eingesetzt, da Wasser zum einen kostengünstig erhältlich ist und zum anderen unter Aspekten des Umwelt- und Arbeitslebens unbedenklich ist.

Bevorzugt wird es, wenn die Beschichtungszusammensetzung mindestens einen weiteren Füllstoff aufweist. Wenn die Beschichtungszusammensetzung einen weiteren Füllstoff aufweist, so hat es sich bewährt, wenn die Beschichtungszusammensetzung den weiteren Füllstoff in Mengen von 0,01 bis 50 Gew.-%, vorzugsweise 0,05 bis 35 Gew.-%, bevorzugt 0,1 bis 30 Gew.-%, besonders bevorzugt 0,1 bis 25 Gew.-%, ganz besonders bevorzugt 1 bis 10 Gew.-%, bezogen auf die Beschichtungszusammensetzung, aufweist.

Gleichermaßen hat es sich bewährt, wenn der weitere Füllstoff ein anorganischer Füllstoff, insbesondere ein partikelförmiger anorganischer Füllstoff, ist.

In diesem Zusammenhang werden besonders gute Ergebnisse erhalten, wenn der weitere Füllstoff ausgewählt ist aus Calciumcarbonat, Aluminiumoxid, Aluminiumhydroxid, Magnesiumhydroxid, Bariumsulfat, Calciumsulfat, Quarz, Calciumsilikat und deren Mischungen, vorzugsweise Calciumcarbonat. Durch die Verwendung weiterer Füllstoffe kann einerseits der Einsatz von kostenintensivem Bindemittel minimiert werden und können andererseits die mechanischen Eigenschaften der resultierenden Beschichtung gezielt eingestellt werden.

Darüber hinaus kann es vorgesehen sein, dass die Beschichtungszusammensetzung mindestens ein Pigment aufweist. Falls die Beschichtungszusammensetzung ein Pigment aufweist, so werden besonders gute Ergebnisse erhalten, wenn die Beschichtungszusammensetzung das Pigment in Mengen von 1 bis 30 Gew.-%, vorzugsweise 2 bis 25 Gew.-%, bevorzugt 3 bis 20 Gew.-%, besonders bevorzugt 5 bis 15 Gew.-%, bezogen auf die Beschichtungszusammensetzung, aufweist. Durch die Verwendung von Pigmenten insbesondere in den zuvor genannten Mengen lässt sich die Färbung der resultierenden Beschichtung gezielt einstellen. Es ist eine Besonderheit, dass mit den beschriebenen Beschichtungszusammensetzungen nahezu beliebig gefärbte Beschichtungen erzeugt werden können, welche in Bezug auf flüssiges Wasser schaltbare Funktionsbeschichtungen darstellen.

Eine Vielzahl an Pigmenten, welche dem Fachmann bekannt sind, können im Rahmen der vorliegenden Erfindung eingesetzt werden. Besonders gute Ergebnisse werden jedoch erhalten, wenn das Pigment ausgewählt ist aus der Gruppe von Titandioxid, Zinkoxid, Eisenoxiden, Chromoxiden, Cadmiumsulfid, Zinksulfid und Chromaten sowie deren Mischungen, vorzugsweise Titandioxid und Zinkoxid sowie deren Mischungen.

Was nun die Menge an Partikeln in der Beschichtungszusammensetzung anbelangt, so kann diese naturgemäß in weiten Bereichen variieren. Es hat sich jedoch bewährt, wenn die Beschichtungszusammensetzung einen Gesamtgehalt an Partikeln, insbesondere in Form des Kompositmaterials, weiterer Füllstoffe und Pigmente, von weniger als 74 Vol.-%, insbesondere weniger als 60 Vol.-%, bezogen auf das Volumen der Beschichtungszusammensetzung, aufweist.

Gleichermaßen kann es vorgesehen sein, dass die Beschichtungszusammensetzung einen Gesamtgehalt an Partikeln, insbesondere in Form des Kompositmaterials, weiterer Füllstoffe und Pigmente, von 10 bis 74 Vol.-%, insbesondere 20 bis 65 Vol.-%, vorzugsweise 25 bis 60 Vol.-%, bevorzugt 35 bis 60 Vol.-%, bezogen auf die Beschichtungszusammensetzung, aufweist.

Die Beschichtungszusammensetzung sollten nicht mehr als 74 Vol.-% Partikel bzw. Füllstoffe enthalten, da bei höheren Anteilen an Füllstoffen die Füllstoffe schnell aus der resultierenden Beschichtung herausgelöst werden; die Beschichtung kreidet.

Zur Einstellung geringer Sd-Werte ist jedoch ein möglichst hoher Anteil an Kompositpartikeln in der Beschichtungszusammensetzung von Vorteil, bis hin zur kritischen Pigmentvolumenkonzentration von 74 Vol.-%. Mit zunehmendem Anteil an Füllstoffkonzentration über 66 Vol.-% verschlechtert sich allerdings die kapillare Wasseraufnahme drastisch. Als Vorteilhaft hat sich eine Volumenkonzentration der Kompositpartikel von 20 und 60 Vol.-% erwiesen, insbesondere von 35 und 55 Vol.-%, bezogen auf die Beschichtungszusammensetzung.

Darüber hinaus ist es vorteilhaft, wenn die Beschichtungszusammensetzung mindestens ein Hydrophobierungsmittel, insbesondere ein Silanisierungsmittel, aufweist.

Wenn die Beschichtungszusammensetzung ein Hydrophobierungsmittel aufweist, so weist die Beschichtungszusammensetzung das Hydrophobierungsmittel üblicherweise in Mengen von 0,01 bis 10 Gew.-%, vorzugsweise 0,1 bis 7,5 Gew.-%, bevorzugt 0,5 bis 5 Gew.-%, besonders bevorzugt 1 bis 3 Gew.-%, bezogen auf die Beschichtungszusammensetzung, auf.

Vorzugsweise ist das Hydrophobierungsmittel, insbesondere Silanisierungsmittel, ausgewählt ist aus der Gruppe von Silanen, oligomeren Silanen, Silanolen, Siloxanen, Silikonaten und deren Mischungen, insbesondere oligomeren Silanen, Silanolen, Siloxanen und deren Mischungen. Besonders bevorzugt werden in diesem Zusammenhang hydrolisierbare Silane oder deren Oligomere, d. h. Siloxane, verwendet. Besonders gute Ergebnisse werden dabei im Rahmen der vorliegenden Erfindung erhalten, wenn das Hydrophobierungsmittel ausgewählt ist aus Alkyldimethoxysilanen, Dialkyldimethoxysilanen, Phenyltriethoxysilanen sowie Diphenyldimethoxysilanen sowie deren Mischungen und Kondensationsprodukten, insbesondere Methyltrimethoxysilan, Octyltriethoxisilan, Phenyltriethoxysilan, Dimethyldimethoxysilan, Diphenyldiethoxysilan sowie deren Mischungen und Oligomere.

Im Hinblick auf die Beschichtungszusammensetzung ist es üblicherweise vorgesehen, dass die Beschichtungszusammensetzung mindestens eine weitere Komponente, insbesondere in Form eines Additivs und/oder eines Füllstoffs, aufweist.

In diesem Zusammenhang ist die weitere Komponente üblicherweise ausgewählt aus der Gruppe von Rheologieadditiven, Konservierungsmitteln, Stabilisatoren, Assoziativ-Verdicker, Säuren und/oder Basen, Tensiden, entschäumenden Komponenten, Filmbildnern, Wachsen, UV-Absorbern, biogenen Wirkstoffen, pH-Stabilisatoren, pH-Einstellmitteln und Farbstoffen. Durch die Verwendung von weiteren Komponenten, insbesondere Additiven und Hilfsstoffen, können zum einen die Eigenschaften der Beschichtungszusammensetzung, insbesondere Eigenschaften der Beschichtungszusammensetzung, welche für die Verarbeitung und Lagerung relevant sind, sowie die Eigenschaften der resultierenden Beschichtungen gezielt eingestellt wird.

Wenn die Beschichtungszusammensetzung eine weitere Komponente enthält, so enthält die Beschichtungszusammensetzung die weitere Komponente üblicherweise in Mengen von 0,01 bis 15 Gew.-%, insbesondere 0,05 bis 10 Gew.-%, vorzugsweise 0,1 bis 8 Gew.-%, bevorzugt 0,1 bis 5 Gew.-%, bezogen auf die Beschichtungszusammensetzung.

Eine besonders vorteilhafte Beschichtungszusammensetzung enthält
(A) ein Kompositmaterial in Mengen von 5 bis 60 Gew.-%,
(B) ein Bindemittel in Mengen von 5 bis 50 Gew.-%,
(C) ein Dispersionsmittel, insbesondere Wasser, in Mengen von 20 bis 80 Gew.-%,
(D) mindestens einen weiteren Füllstoff in Mengen von 0,01 bis 50 Gew.-%,
(E) mindestens ein Pigment in Mengen von 1 bis 30 Gew.-%,
(F) ein Hydrophobierungsmittel in Mengen von 0,01 bis 10 Gew.-%, und
(D) Hilfsstoffe und/oder additive in Mengen von 0,01 bis 15 Gew.-%
jeweils bezogen auf die Beschichtungszusammensetzung.

Auf diese bevorzugte Beschichtungszusammensetzung lassen sich sämtliche vorgenannten Parameter und Merkmale entsprechend anwenden.

Üblicherweise weist die Beschichtungszusammensetzung einen Feststoffgehalt im Bereich von 30 bis 70 Gew.-%, insbesondere 35 bis 60 Gew.-%, vorzugsweise 40 bis 55 Gew.-%, bezogen auf die Beschichtungszusammensetzung auf.

Was nun die Viskosität der Beschichtungszusammensetzung anbelangt, so kann sie in Abhängigkeit von dem beabsichtigten Einsatz sowie der jeweils anzuwendenden Applikationsform in weiten Bereichen variiert werden. Üblicherweise weist die Beschichtungszusammensetzung jedoch eine dynamische Viskosität nach Brookfield bei 20 °C im Bereich von 100 bis 50.000 mPas, insbesondere 500 bis 30.000 mPas, vorzugsweise 1.000 bis 20.000 mPas, bevorzugt 2.000 bis 15.000 mPas, besonders bevorzugt 3.000 bis 10.000 mPas, ganz besonders bevorzugt 4.000 bis 8.000 mPas, auf.

Die Beschichtungszusammensetzung kann auf jede geeignete, dem Fachmann an sich bekannte Methode auf Substrate appliziert werden. Üblicherweise wird die Beschichtungszusammensetzung allerdings durch Streichen, Walzen, Rakeln und/oder Sprühen auf ein Substrat, insbesondere eine Gebäudefassade, aufgebracht.

Was nun die Applikation der Beschichtungszusammensetzung anbelangt, so hat es sich bewährt, wenn die Beschichtungszusammensetzung mit einer Schichtdicke im Bereich von 20 bis 600 µm, insbesondere 50 bis 500 µm, vorzugsweise 100 bis 350 µm, bevorzugt 100 bis 200 µm, auf ein Substrat, insbesondere eine Gebäudefassade, aufgebracht wird.

Gleichermaßen hat es sich bewährt, wenn die Beschichtungszusammensetzung in 1 bis 10, insbesondere 1 bis 5, vorzugsweise 2 bis 3, Schichten auf ein Substrat aufgebracht ist.

Weiterhin kann es vorgesehen sein, dass die Beschichtungszusammensetzung in einer Menge von 100 bis 500 g/m², insbesondere 150 bis 400 g/m², vorzugsweise 150 bis 350 g/m², bevorzugt 150 bis 250 g/m², auf ein Substrat aufgetragen wird.

Mit dem zuvor beschriebenen Kompositmaterial bzw. der zuvor beschriebenen Beschichtungszusammensetzung sind neuartige und besonders leistungsfähige Beschichtungen zugänglich.

Eine besonders vorteilhafte Beschichtung, insbesondere zur Beschichtung von Gebäudefassaden, weist
(A) ein zuvor beschriebenes Kompositmaterial und
(B) ein ausgehärtetes Bindemittel
auf.
Üblicherweise weist die Beschichtung eine Schichtdicke im Bereich von 20 bis 500 µm, insbesondere 50 bis 400 µm, vorzugsweise 100 bis 300 µm, bevorzugt 150 bis 250 µm auf.

Darüber hinaus kann es vorgesehen sein, dass die Beschichtung ein Flächengewicht von 90 bis 200 g/m², insbesondere 100 bis 190 g/m², vorzugsweise 110 bis 180 g/m², bevorzugt 120 bis 180 g/m², aufweist.

Weiterhin kann es im Rahmen der vorliegenden Erfindung vorgesehen sein, dass die Beschichtung wasserabweisend, insbesondere schlagregendicht ist. Gleichermaßen kann es jedoch auch vorgesehen sein, dass die Beschichtung diffusionsoffen gegenüber Wasserdampf ist.

Bevorzugt wird es, wenn die Beschichtung wasserabweisend, insbesondere schlagregendicht, und diffusionsoffen gegenüber Wasserdampf ist. Es ist eine Besonderheit der beschriebenen Beschichtung, dass sie sowohl wasserabweisend als diffusionsoffen gegenüber Wasserdampf sein kann.

Es hat sich bewährt, wenn die Beschichtung eine kapillare Wasseraufnahme, bestimmt nach DIN EN ISO 1062-3, im Bereich von 0,001 bis 0,5, insbesondere 0,005 bis 0,4, vorzugsweise 0,01 bis 0,3, bevorzugt 0,01 bis 0,1, aufweist.

Vorzugsweise weist die Beschichtung eine wasserdampfdiffusionsäquivalente Luftschichtdicke bestimmt nach DIN EN ISO 7783-2, im Bereich von 0,001 bis 0,5, insbesondere 0,001 bis 0,3, vorzugsweise 0,005 bis 0,2, bevorzugt 0,01 bis 0,1, auf. Die Beschichtung ist somit vorzugsweise hochdiffusionsoffen.

Gleichermaßen kann es vorgesehen sein, dass die Beschichtung rissüberbrückend ist. Mit rissüberbrückenden Beschichtungen können sowohl Unebenheiten als auch Spannungen im Mauerwerk ausgeglichen werden, ohne dass die Beschichtung reißt und in ihrer Funktion vermindert wird. Eine hohe Elastizität des eingesetzten Binders erzeugt eine rissüberbrückende Wirkung der Fassadenfarbe und zusätzlich werden Trocknungsrisse unterbunden.

Üblicherweise ist es vorgesehen, dass die Beschichtung eine Reißdehnung nach DIN 5350 EN von bis zu 500 %, insbesondere 400 %, vorzugsweise 350 %, aufweist. Gleichermaßen kann es vorgesehen sein, dass die Beschichtung eine Reißdehnung nach DIN 5350 EN im Bereich von 70 bis zu 500 %, insbesondere 80 bis 400 %, vorzugsweise 100 bis 350 %, aufweist.

Mit dem zuvor erfindungsgemäßen Kompositmaterial und der Beschichtungszusammensetzung sind Beschichtungssysteme aufweisend eine zuvor beschriebene Beschichtung, zur Aufbringung auf ein Substrat zugänglich.

Vorteilhafterweise kann es in diesem Zusammenhang vorgesehen sein, dass zwischen der Beschichtung und dem Substrat eine Grundierschicht angeordnet ist.

Wenn zwischen dem Substrat und der Beschichtung eine Grundierschicht angeordnet ist, so kann es vorgesehen sein, dass die Grundierschicht die Beschichtung und/oder das Substrat unmittelbar kontaktiert. Es wird in diesem Zusammenhang besonders bevorzugt, wenn die Grundierschicht die Beschichtung und das Substrat unmittelbar kontaktiert.

Dabei ist es möglich, dass die Grundierschicht auf Basis mindestens eines organischen Polymers und mindestens einer Organosiliciumverbindung ausgebildet ist.

In diesem Zusammenhang kann es vorgesehen sein, dass das Polymer ausgewählt ist aus Polyacrylaten und Polyestern sowie deren Mischungen.

Was die Organosiliciumverbindung anbelangt, so ist diese üblicherweise ausgewählt aus Silanen, Silanolen und Siloxanen.

Insbesondere werden gute Ergebnisse erhalten, wenn die Organosiliciumverbindung ausgewählt ist aus der Gruppe von Alkyltrimethoxysilanen, Dialkyldimethoxysilanen, Phenyltriethoxysilanen, Diphenyldimethoxysilanen sowie deren Mischungen und Oligomeren. Insbesondere kann es dabei vorgesehen sein, dass die Organosiliciumverbindung ausgewählt ist aus der Gruppe von Methyltrimethoxysilan, Octyltriethoxysilan, Phenyltriethoxysilan, Dimethyldimethoxysilan, Diphenyldimethoxysilan und deren Oligomeren.

Mit der zuvor genannten Grundierschicht kann die Haftung der beschriebenen Beschichtung bzw. der beschriebenen Beschichtungszusammensetzung auch auf sehr ungünstigen Untergründen gewährleistet werden. Insbesondere gewährleisten Grundierschichten mit den zuvor genannten hohen Anteilen an Organosiliciumverbindungen auch eine hohe Wasserdampfdiffusionsdurchlässigkeit der Grundierschicht und folglich des gesamten Beschichtungssystems.

Alternativ kann es jedoch auch vorgesehen sein, dass der zuvor beschriebenen erfindungsgemäßen Beschichtungszusammensetzung bis zu 10 Gew.-% eines handelsüblichen Tiefengrundes oder bis zu 10 Gew.-% der zuvor genannten Organosiliciumverbindungen beigemischt werden, um eine Beschichtungszusammensetzung zu bilden, welche in einer Schicht auf das Substrat aufgetragen wird. Anschließend werden weitere Schichten der Beschichtungszusammensetzung ohne Tiefengrund oder hohe Anteile an Organosiliciumverbindungen aufgetragen. So kann oftmals auf eine spezielle Grundierschicht verzichtet werden.

Was nun die Schichtdicke der Grundierschicht anbelangt, so hat es sich bewährt, wenn die Grundierschicht eine Schichtdicke im Bereich von 10 bis 100 µm, insbesondere 20 bis 80 µm, vorzugsweise 20 bis 70 µm, bevorzugt 20 bis 50 µm, aufweist.

Weiterhin ist durch die erfindungsgemäßen Kompositmaterialien ein Verfahren zur Herstellung eines Beschichtungssystems, insbesondere zur Beschichtung einer Gebäudefassade, wobei eine Beschichtungszusammensetzung, auf ein Substrat, insbesondere eine Gebäudefassade, aufgebracht wird und ausgehärtet bzw. vernetzt wird, so dass eine Beschichtung erhalten wird, zugänglich.

Dabei ist es üblicherweise vorgesehen, dass die Beschichtungszusammensetzung durch Streichen, Walzen, Rakeln und/oder Sprühen, insbesondere durch Streichen, Walzen, und/oder Rakeln, auf das Substrat aufgebracht wird.

Was die Trocknungszeit der Beschichtungszusammensetzung anbelangt, so hat es sich bewährt, wenn die Beschichtungszusammensetzung über einen Zeitraum von 1 bis 24 Stunden, insbesondere 4 bis 20 Stunden, vorzugsweise 6 bis 16 Stunden, bevorzugt 8 bis 12 Stunden, ausgehärtet bzw. vernetzt wird, insbesondere trocknet.

Bevorzugt ist es vorgesehen, dass vor Aufbringung der Beschichtungszusammensetzung eine Grundierschicht, insbesondere in Form einer Grundierungszusammensetzung, auf das Substrat aufgebracht wird.

Besonders gute Ergebnisse werden in diesem Zusammenhang erhalten, wenn die Grundierungszusammensetzung auf Basis einer Dispersion, insbesondere einer wässrigen Dispersion, ausgebildet ist.

Wie zuvor bereits im Zusammenhang mit dem Beschichtungssystem ausgeführt, werden besonders gute Ergebnisse erhalten, wenn die Grundierungszusammensetzung mindestens ein organisches Polymer und mindestens eine Organosiliciumverbindung aufweist.

Besonders bevorzugt wird es dabei, wenn die Organosiliciumverbindung ausgewählt ist aus Silanen, Silanolen und Siloxanen, wobei die Verwendung der zuvor genannten spezifischen Silane bzw. ihrer Oligomeren bevorzugt ist. Besonders gute Ergebnisse werden dabei erhalten, wenn die Organosiliciumverbindung ausgewählt ist aus der Gruppe von Alkoxysilanen, und Alkoxysiloxanen, insbesondere Methyltrimethoxysilan, Octyltriethoxysilan, Phenyltriethoxysilan, Dimethyldimethoxysilan, Diphenyldimethoxysilan und deren Oligomeren.

Üblicherweise ist es vorgesehen, dass die Grundierungszusammensetzung die Organosiliciumverbindung in Mengen von 0,5 bis 25 Gew.-%, insbesondere 1 bis 15 Gew.-%, vorzugsweise 1 bis 10 Gew.-%, bezogen auf die Grundierungszusammensetzung, aufweist. Dies gilt insbesondere für den Fall, dass eine spezielle Grundierungszusammensetzung verwendet wird.

Wie zuvor bereits ausgeführt, ist es jedoch auch möglich, dass die zuvor beschriebene Beschichtungszusammensetzung durch Zugabe von 10 bis 15 Gew.-% eines handelsüblichen Tiefengrundes oder durch Zusatz von maximal 10 Gew.-% an Silanen bzw. Siloxanen oder Silanolen modifiziert und als unterste Schicht des Beschichtungssystems verwendet wird. Auf auf diese Schicht wird nachfolgend dann die unmodifizierte Beschichtungszusammensetzung aufgetragen.

Was nun die Viskosität der Grundierungszusammensetzung anbelangt, so hat es sich bewährt, wenn die Grundierungszusammensetzung eine dynamische Viskosität nach Brookfield bei 20 °C im Bereich von 80 bis 2.500 mPas, insbesondere 85 bis 1.500 mPas, vorzugsweise 85 bis 1.000 mPas, bevorzugt 90 bis 700 mPas, besonders bevorzugt 100 bis 500 mPas, aufweist.

Üblicherweise ist es vorgesehen, dass die Grundierungszusammensetzung durch Streichen, Walzen, Rakeln und/oder Sprühen auf das Substrat aufgebracht wird.

Gleichermaßen kann es vorgesehen sein, dass die Grundierungszusammensetzung mit einer Schichtdicke im Bereich von 10 bis 150 µm, insbesondere 20 bis 120 µm, vorzugsweise 20 bis 100 µm, bevorzugt 20 bis 80 µm, auf das Substrat aufgetragen wird.

Der Gegenstand der vorliegenden Erfindung wird nachfolgend weitergehend in nicht beschränkender Weise anhand bevorzugter Ausführungsformen durch die Figurenbeschreibungen und die Ausführungsbeispiele erläutert.

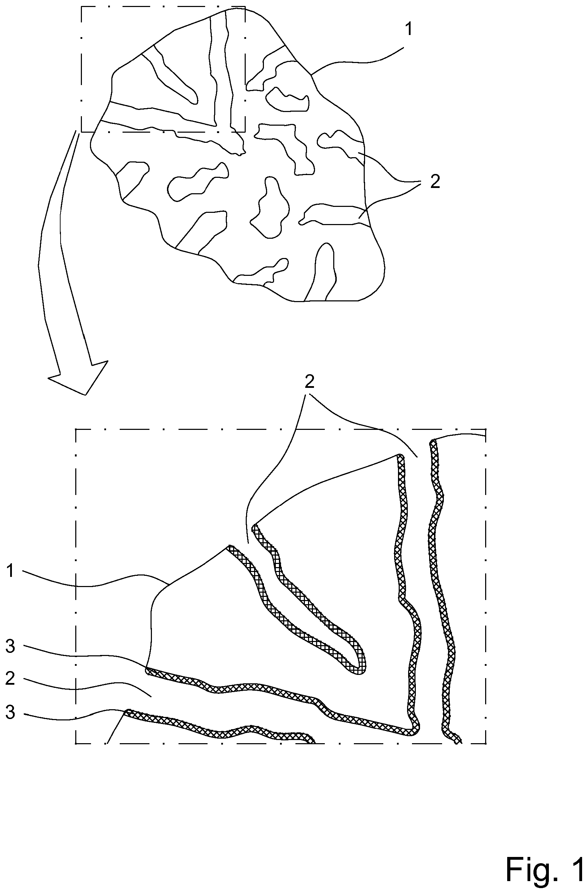

Es zeigt Fig. 1 den schematischen Aufbau eines erfindungsgemäßen Kompositmaterials in Form eines Kompositpartikels 1 mit einem Porensystem, welches vorzugsweise durch offene Poren 2 gebildet wird. Das Trägermaterial des Kompositpartikels 1 besteht vorzugsweise aus Kieselgel oder Kieselsäuren mit Partikelgrößen im Bereich von 10 bis 60 µm. Die Wände der Poren 2 der Kompositpartikel 1 sind mit einem quellfähigen Material 3, vorzugsweise einem superabsorbierenden Polymer auf Acrylatbasis, beladen bzw. beschichtet, wobei das quellfähige Material 3 in nichtgequollenem Zustand, wie in Fig. 1 abgebildet, die Poren 2 des Kompositmaterials 1 nicht verschließt. Der Kompositpartikel 1 weist somit eine hohe Wasserdampfdiffusionsrate auf, d. h. er ist in hohem Maße durchlässig gegenüber gasförmigem Wasser. Gleiches gilt auch für Beschichtungen, in welche der Kompositpartikel eingearbeitet ist.

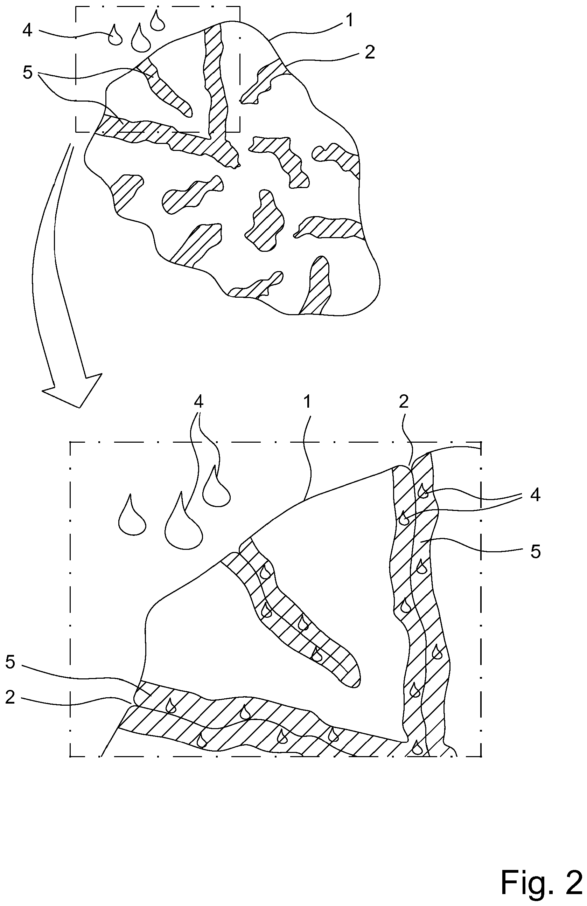

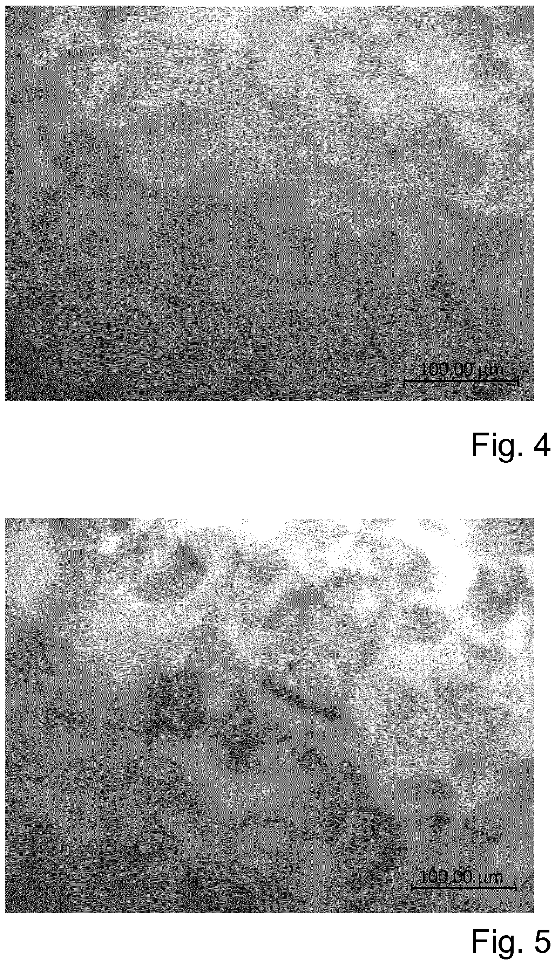

Fig. 2 zeigt eine schematische Darstellung des erfindungsgemäßen Kompositmaterials, insbesondere eines Kompositpartikels 1, nach Inkontaktbringen mit dem flüssigen Wasser 4. Durch den Kontakt mit flüssigem Wasser 4 geht das in Fig. 1 dargestellte quellfähige Material 3 in den Poren 2 des Kompositpartikels 1 in einen in Fig. 5 dargestellten gequollenen Zustand 5 über, welcher die Poren 2 des Kompositmaterials 1 verschließt, so dass kein weiteres Wasser durch die Poren des Komopositmaterials 1 aufgenommen werden kann.

Das erfindungsgemäße Kompositmaterial 1 zeichnet sich speziell dadurch aus, dass das flüssige Wasser 4, welches in dem gequollenen Polymer 5 absorbiert ist, in gasförmiger Form wieder abgegeben werden kann, so dass das gequollene quellfähige Material, insbesondere das gequollene superabsorbierende Polymer, wieder in den nichtgequollenen Zustand 3, wie in Fig. 1 dargestellt, übergehen kann. Das erfindungsgemäße Kompositmaterial 1 erlaubt somit die Herstellung von schaltbaren Funktionsmaterialien, welche in hohem Maße wasserdampfdurchlässig sind, deren Poren sich jedoch bei Kontakt mit flüssigem Wasser verschließen, so dass die Materialien wasserabweisend sind. Aufgrund des Quellvorgangs zeigen Beschichtungen mit dem erfindungsgemäßen Kompositmaterial zu Beginn, insbesondere innerhalb der ersten halben Stunde, des Kontaktes mit Wasser eine hohe kapillare Wasseraufnahme auf, die allerdings nach dem Verschluss der Poren durch das gequollene Polymer auf Werte weit unterhalb der üblichen Beschichtungen sinkt, so dass die mit den erfindungsgemäßem Kompositmaterial hergestellten Beschichtungen insgesamt wasserabweisend sind.

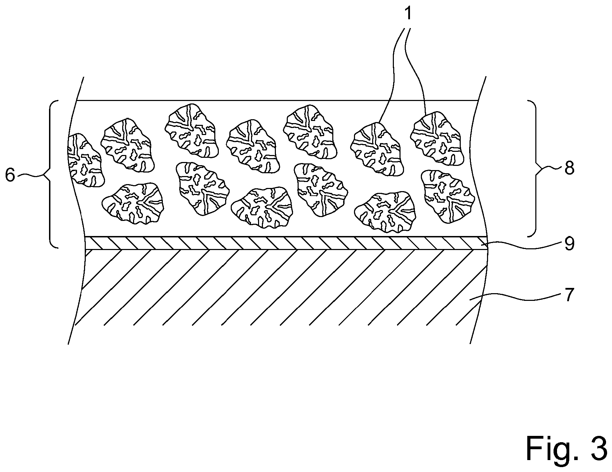

Weiterhin zeigt Fig. 3 ein das erfindungsgemäße Kompositmaterial enthaltendes Beschichtungssystem 6, welches auf ein Substrat 7 aufgebracht ist. Bei dem Substrat 7 handelt es sich vorzugsweise um eine Gebäudefassade bzw. Gebäudewand. Das Beschichtungssystem 4 besteht in der Figurendarstellung aus einer Beschichtung, insbesondere Funktionsbeschichtung 8, welche die schaltbaren Kompositpartikel 1 enthält, und einer Grundierschicht 9. Die Beschichtung 7 enthält die Kompositpartikel 1 und ist dadurch in hohem Maße gegenüber Wasserdampf durchlässig, jedoch bei Kontakt mit flüssigem Wasser wasserabweisend.

Das Bindemittel der Beschichtung 8 ist üblicherweise ein polymeres Vinylacetat-Ethylen-Acrylat-Bindemittel, welches einerseits in hohem Maße wasserabweisend ist und andererseits hervorragende Reißdehnungen von bis zu 330 % aufweist, so dass die Beschichtung 8 auch thermisch induzierte Veränderungen und Spannungen des Substrates 7 ausgleichen kann, ohne beschädigt zu werden.

Die Grundierschicht 9 ist üblicherweise auf Basis eines polymeren Bindemittels, insbesondere eines Acrylatbindemittels, ausgebildet, welches bis zu 10 Gew.-% an hydrolisierbaren Silanen, Siloxanen oder Silanolen enthält. Durch die Verwendung von Silanen, Siloxanen und Silanolen wird einerseits die Haftung sowohl der Grundierschicht 9 als auch der darauf aufgebrachten Beschichtung 8 auf dem Substrat 7 verbessert und andererseits eine hohe Wasserdampfdurchlässigkeit der Grundierschicht 9 gewährleistet. Auf diese Weise kann Feuchtigkeit stets vom Substrat, insbesondere einem Mauerwerk, an die Umgebung abgegeben werden, so dass Schimmelbildung effektiv verhindert wird.

Fig. 4 zeigt in 500facher Vergrößerung eine lichtmikroskopische Aufnahme einer Beschichtung mit den erfindungsgemäßen Kompositpartikeln in nichtgequollenem Zustand. Die abgebildete Beschichtung weist einen Volumenanteil an Kompositpartikeln von 55 % auf. Die Kompositpartikel wurden durch Umsetzung von Kieselgel mit Acrylsäure und Methylenbisacrylamid hergestellt. In Fig. 4 sind die einzelnen Kompositpartikel in der Beschichtung gut zu erkennen.

Fig. 5 zeigt in Form einer lichtmikroskopischen Aufnahme in 500facher Vergrößerung die gleiche Beschichtung wie Fig. 4, nachdem die Beschichtung mit gefärbtem Wasser behandelt, insbesondere in Kontakt gebracht, wurde. Überschüssiges Wasser, welches in nicht von der Beschichtung aufgenommen wurde, wurde vor Aufnahme des Lichtbildes entfernt. Es zeigt sich in Fig. 5 sehr deutlich, dass das Wasser in die Kompositpartikel aufgenommen wurde, was an den dunklen Verfärbungen der Kompositpartikel erkennbar ist. Durch die Absorption des flüssigen Wassers quillt das superabsorbierende Polymer in den Poren des porösen Trägermaterials auf, so dass kein weiteres flüssiges Wasser mehr durch die Kapillaraktivität der Füllstoffe aufgenommen werden kann. Die Beschichtung wird somit wasserabweisend.

### Ausführungsbeispiele

### 1. Herstellung funktionalisierter Kompositpartikel

Nachfolgend wird die Herstellung erfindungsgemäßer Kompositpartikel anhand eines Silicagel-Trägermaterial und eines superabsorbierenden Polymer auf Acrylatbasis beschrieben.

Es werden zwei Lösungen, eine Monomerlösung und eine Starterlösung, mit folgenden Zusammensetzungen hergestellt:

### Monomerlösung

64 g Acrylsäure (Monomer)
8,4 g N,N'-Methylenbisacrylamid (Vernetzer)
325,6 g Wasser

Es werden 400 g der Monomerlösung mit einem Monomeranteil von 4,8 Mol.-%, einem Vernetzeranteil von 6,1 Mol.-% und einem Neutralisationsgrad von 0 % vorbereitet.

**Starterlösung**

| | |
|---|---|
| 0,32 g | Ammoniumperoxodisulfat |
| 0,32 g | Natriummetabisulfit |
| 5 ml | Wasser |

Anschließend werden 516 g Silica Gel mit einer Partikelgröße von 0,040 bis 0,063 mm vorgelegt. Die Starterlösung und Monomerlösung werden in kleinere Portionen geteilt und jeweils vor der Zugabe zum Füllstoff miteinander vermischt, um eine vorzeitige Polymerisation der Monomerlösung zu verhindern, hierbei gegebenenfalls unterstützend ein Eisbad verwendet werden.

Die vereinigten Lösungen werden über einen Zeitraum von 60 min mit einer Schlauchpumpe zu dem Feststoff hinzugegeben bei U = 10 rpm und einer Dosierung von ca. 5 ml/min. Unter Rühren erfolgt die Zugabe der Monomerlösung wobei ein rieselfähiges Produkt erhalten bleibt.

Nachgerührt wird bei weniger als 100 U/min mit einem Ankerrührer.

Das Silica Gel ist an der Beladungsgrenze, was sich darin äußert, dass das Produkt nicht mehr staubt und eine mehlige, jedoch feuchte, Konsistenz aufweist. Anschließend wird der Reaktionsbehälter mit Stickstoff gespült und nachfolgend im Wasserbad bei 60 °C unter Rühren die Polymerisation für 1 Stunde durchgeführt.

Durch unzureichende Durchmischung kann es hierbei während der Polymerisation zur Agglomeratbildung in den Randbereichen kommen, diese lassen sich jedoch relativ leicht auflösen. Das erhaltene Produkt wird über Nacht im Trockenschrank bei 60 °C getrocknet. Es ist eine leichte Agglomeratbildung möglich, welche sich jedoch einfach aufbrechen lassen.

### 2. Herstellung einer Beschichtungszusammensetzung

In der nachfolgenden Tabelle 1 ist die Zusammensetzung einer bevorzugten Beschichtungszusammensetzung angegeben.

**Tab. 1: Beschichtungszusammensetzung auf Basis einer**

| VEA-Copolymerdispersion | | |
|---|---|---|
| Funktion | Inhaltsstoff / Produkt | Anteil [Gew.-%] |
| Polymerer Binder | Mowilith LDM1865WP Vinylacetat-Ethylen-Acrylat-Copolymer Feststoffgehalt: 53,5 Gew.-% | 29,5 |
| Quellfähige Füllstoffe | Kompositpartikel | 17,5 |
| Weitere Füllstoffe | OMYACARB 2, Calciumcarbonat | 1 |
| | SOCAI P3, gefälltes Calciumcarbonat | 1,5 |
| Pigment | Kronos 2190, Titandioxid | 15,0 |
| Silanisierungsmittel | Hydrophobierungsmittel | 1,2 |
| Hilfsstoffe | pH-Regulator | 0,2 |
| | Dispergierhilfsmittel | 0,2 |
| | Verdicker | 1 |
| | Entschäumer | 0,3 |
| | Biozid | 0,1 |
| Dispersionsmittel | Wasser | 32,5 |

Zur Herstellung der in Tabelle 1 angegebenen Beschichtungszusammensetzung im 1000 ml-Maßstab werden 250 ml Wasser vorgelegt und mit 175 g Kompositpartikeln unter Rühren mit einem Dissolver bei 750 bis 500 rpm versetzt. Anschließend werden weitere 65 ml Wasser hinzugegeben und nochmals 5 Minuten gerührt.

Anschließend werden 2,0 g Dispergierhilfsmittel und nachfolgend 175 g Titandioxid Zugabe unter Rühren mit dem Dissolver bei 1500 bis 2000 rpm zugegeben.

Danach erfolgt die Zugabe von 25 g Calciumcarbonat unter Rühren mit dem Dissolver bei 1500 bei 2000 rpm sowie die Zugabe von 10,0 g Aluminiumsilikat gleichfalls unter Rühren mit dem Dissolver bei 1500 bis 2000 rpm. Anschließend wird 10 Minuten nachgerührt.

Zu der Mischung werden 3,0 g Entschäumer unter Rühren mit dem Dissolver bei 500 bis 750 rpm zugegeben und 10 Minuten nachgerührt.

Anschließend werden 295 g Vinylacetat/Ethylen/Acrylsäure-Binder schnell zugegeben und mit dem Dissolver bei 2000 rpm gerührt. Die Mischung wird mit 10 ml Wasser versetzt und es werden 1,0 g Verdicker zugegeben, wonach erneut 10 Minuten mit dem Dissolver bei 2000 rpm nachgerührt wird.

Die Mischung wird mit 1,0 g Biozid versetzt und es wird für 5 Minuten bei 750 rpm mit dem Dissolver nachgerührt.

### 3. Beschichten eines Substrates

### 3.1 Untergundvorbehandlung

Vor der Auftragung des Beschichtungssystems wird der Untergrund vorbereitet, hierfür werden fehlerhafte Beschichtungen mechanisch oder durch Druckwasserstrahlen entfernt. Der Untergrund muss vor dem Auftragen des ersten Anstrichs trocken sein.

### 3.2 Grundierschicht

Durch Beimischung von max. 10 Gew.-% Tiefgrund zu der unter 2. beschriebenen Beschichtungszusammensetzung kann in den meisten Fällen auf eine zusätzliche Grundierschicht verzichtet werden.

### 3.3. Grund-, Zwischen- und Schlussanstrich

Die Beschichtungszusammensetzung wird vorzugsweise in 2 oder 3 Schichten durch Grund-, gegebenenfalls Zwischen- und Schlussanstrich auf ein Substrat, insbesondere eine Gebäudefassade, aufgebracht. Der Auftrag erfolgt vorzugsweise durch Pinsel oder Rolle.

Für den Grundanstrich können der Beschichtungszusammensetzung, falls keine Grundierschicht aufgetragen wird, max. 10 Gew.-% Tiefgrund - wie oben bereits ausgeführt - beigemischt werden.

Grund- bzw. Zwischenanstrich sind mit max. 10 Gew.-% Wasser zu verdünnen. Auf rauen Untergründen, je nach Struktur und Saugfähigkeit, müssen Zwischen- und Schlussbeschichtung etwas höher verdünnt und gut ausgestrichen werden. Der Verdünnungsgrad ist durch Probeanstrich zu ermitteln.

Zur Egalisierung ungleichmäßig abgescheibter Putze und zur Verschlämmung feiner Putzrisse kann ein Zwischenanstrich mit max. 5 bis 10 Gew.-% Wasser verdünnt ausgeführt werden.

Der Schlussanstrich kann mit max. 5 bis 10 Gew.-% Wasser verdünnt werden. Insbesondere bei intensiven Farbtönen ist zur Erzielung einer streifenfreien Oberfläche die Schlussbeschichtung mit 10 Gew.-% Wasser zu verdünnen.

Zwischen den Anstrichen sollte mindestens 12 Stunden Trocknungszeit eingehalten werden. Ca. 150 bis 200 ml/m² der Beschichtungszusammensetzung reichen üblicherweise für einen Anstrich auf glattem Untergrund aus. Auf rauen Flächen erhöht sich der Verbrauch entsprechend. Ein exakter Verbrauch ist durch eine Probebeschichtung zu ermitteln.

### 4. Vergleich mit Beschichtungen des Standes der Technik

Eine die erfindungsgemäßen Kompositpartikel enthaltende Beschichtung und Beschichtungen auf Basis handelsüblicher Silikatfarben, Kunstoffdispersionsfarben und Silikonharzfarben werden unter identischen Bedingungen untersucht. Die Ergebnisse sind in Tabelle 2 dargestellt.

**Tab. 2: Vergleich einer mit erfindungsgemäßen Kompositmaterialien funktionalisierten Beschichtung und handelsüblichen Beschichtungen**

| **Fassadenfarbe** | **Sd-Wert [m]** | **µ-Wert** | **W-Wert [kg/m²*h^{0,5}]** | **Rücktrocknung [3h]** | **Kapillaraktive Trocknung [24 h]** |
|---|---|---|---|---|---|
| **Silikonharzfarbe** | 0,14 | 1500 | 0,08 | 3% | 8% |
| **Silikatfarbe** | 0,01 | 50 | 1,0 | 4% | 22 % |
| **Kunststoffdispersions-farbe** | 0,70 | 4000 | 0,03 | 5% | 18 % |
| **Kunststoffdispersions-farbe** + **funktionalisierte Füllstoffe (erfindungsgemäß)** | 0,01 bis 0,3 | 150 | 0,05 bis 0,2 | 19 % | 35 % |

| | | | | | |
|---|---|---|---|---|---|
| ¹: gemäß DIN EN 7783 ²: gemäß DIN EN 1062 | | | | | |

Tabelle 2 zeigt einige wichtige Farbstoffeigenschaften unterschiedlicher Fassadenfarben, wobei Silikonharzfarben den bislang im Stand der Technik höchsten Standard darstellen und die beste Kombination aus geringer kapillarer Wasseraufnahme bei möglichst hoher Wasserdampfdiffusionsrate aufweisen. Die mit erfindungsgemäßen funktionalisierten Füllstoffen versehene Kunststoffdispersionsfarbe verbessert diese Werte nochmals.

Zusätzlich wird durch den Einsatz der funktionalisierten Füllstoffe eine schnellere Rücktrocknung der Fassadenoberfläche nach Regenbeanspruchung erreicht: Nach einer Wässerung von 24 Stunden (nach DIN EN 1062-3) konnte die Rücktrocknung durch den Einsatz der modifizierten Füllstoffe, d. h. erfindungsgemäßen Kompositparitkel, innerhalb der ersten Stunde von 5 % auf 19 % gesteigert werden.

Die hydrophil eingestellte erfindungsgemäße Fassadenfarbe führt zu einer Spreitung der Oberflächenfeuchte und Ausbildung eines gleichmäßigen Feuchtefilms, der schneller verdunsten kann. Hierdurch wird Grundlage für mikrobiellen Befall in Form von Oberflächenfeuchtigkeit unterbunden. Dies wird durch die hohe Diffusionsfähigkeit der Fassadenbeschichtung weiter begünstigt.

Zudem konnte eine kapillaraktive Trockenwirkung an feuchten mineralischen Untergründen festgestellt werden, die dafür sorgt, dass kapillar gebundenes Wasser im Untergrund an die Oberfläche gesaugt wird und dort schneller abtrocknen kann. Hierdurch wurde eine verbesserte Trocknung im Vergleich zu Silikonharzfarben erzielt. Durch Wasserlagerung nach DIN EN 1062-3 über 24 h anschließend wurde die Rücktrocknung gravimetrisch bestimmt. Die mit der erfindungsgemäß funktionalisierten Fassadenfarbe beschichteten Kalksandsteine zeigten nach 24 Stunden eine Wasserabgabe von 35 Gew.-% im Vergleich zu 18 Gew.-% bei den Silikonharzbeschichtungen.

Durch die Funktionalisierung poröser Füllstoffe mit Superabsorbent Polymers (SAP) lässt sich die kapillare Wasseraufnahme (W-Wert) einer erfindungsgemäß funktionalisierten diffusionsoffenen Wandfarbe von anfangs größer als 0,5 kg/m²h^{0,5} auf Werte im Bereich von unter 0,005 kg/m²h^{0,5} senken, so dass insgesamt W-Werte im Bereich von 0,1 bis 0,03 kg/m²h^{0,5} resultieren und die erfindungsgemäß funktionalisierten Fassadenfarben als wasserabweisend gelten. Die kapillare Wasseraufnahme wird nach DIN 1062 EN bestimmt. Es zeigt sich insbesondere zu Beginn der Messung bis 4 Stunden Messzeit, dass die die erfindungsgemäßen Kompositpartikel enthaltende Fassadenbeschichtung mehr Wasser aufnimmt als handelsübliche Beschichtungen auf Basis von Kunststoffdispersionsfarben. Durch die Wasseraufnahme kommt es zum Verschließen der Poren der die erfindungsgemäßen Kompositpartikel enthaltenden Beschichtung durch Quellung des SAP und die Wasseraufnahmerate sinkt deutlich.

Dies wird erreicht unter Beibehaltung einer hohen Wasserdampfdiffusionsfähigkeit im trockenen Zustand. Die erfindungsgemäß funktionalisierten Wandfarben weisen eine wasserdampfdiffusionsäquivalente Luftschichtdicke (Sd-Wert) zwischen 0,01 und 0,1 m auf und gelten somit als hoch diffusionsoffen.

### Bezugszeichenliste

- 1: Kompositpartikel
- 2: Poren
- 3: quellfähiges Material
- 4: flüssiges Wasser
- 5: gequollenes quellfähiges Material
- 6: Beschichtungssystem
- 7: Substrat
- 8: Beschichtung
- 9: Grundierschicht

## Patentansprüche

1. Kompositmaterial, insbesondere schaltbarer Funktionswerkstoff, vorzugsweise Kompositpartikel, aufweisend
(a) ein poröses Trägermaterial, insbesondere poröse Partikel, und
(b) ein quellfähiges Material,
wobei die Poren des porösen Trägermaterials das quellfähige Material enthalten,
wobei das poröse Trägermaterial ein mineralischer Füllstoff oder eine Mischung von mineralischen Füllstoffen ist,
wobei das poröse Trägermaterial ein überwiegend offenes Porensystem aufweist, und
wobei das quellfähige Material in den Poren des porösen Trägermaterials gebildet wird.

2. Kompositmaterial nach Anspruch 1, **dadurch gekennzeichnet, dass** das Kompositmaterial partikelförmig ist.

3. Kompositmaterial nach einem der vorangehenden Ansprüche, **dadurch gekennzeichnet, dass** das poröse Trägermaterial ein offenes Porensystem aufweist.

4. Kompositmaterial nach einem der vorangehenden Ansprüche, **dadurch gekennzeichnet,**
**dass** der mineralische Füllstoff ausgewählt ist aus Kieselsäuren, insbesondere pyrogenen Kieselsäuren, Xerogelen, insbesondere Kieselgelen, Kieselgur, Zeoliten, Aerogelen, Tuffstein, Blähton, Vermiculit und weiteren Schichtsilikaten, insbesondere Bentonit und/oder Kaolinit, sowie deren Mischungen.

5. Kompositmaterial nach Anspruch 4, **dadurch gekennzeichnet, dass** der mineralische Füllstoff ausgewählt ist aus Kieselsäuren, insbesondere pyrogener Kieselsäure, Kieselgelen, Kieselgur und deren Mischungen, vorzugsweise pyrogener Kieselsäure, Kieselgelen und deren Mischungen.

6. Kompositmaterial nach einem der vorangehenden Ansprüche, **dadurch gekennzeichnet,**
**dass** das Volumen des quellfähigen Materials während des Quellvorgangs, bezogen auf das Volumen des nichtgequollenen quellfähigen Materials, mindestens um den Faktor 0,5, insbesondere mindestens um den Faktor 1, vorzugsweise mindestens um den Faktor 2, bevorzugt mindestens um den Faktor 3, zunimmt und/oder
**dass** das Volumen des quellfähigen Materials, bezogen auf das Volumen des nichtgequollenen quellfähigen Materials, während des Quellvorgangs um den Faktor 0,5 bis 10, insbesondere 1 bis 8, vorzugsweise 2 bis 7, bevorzugt 3 bis 6, zunimmt.

7. Kompositmaterial nach einem der vorangehenden Ansprüche, **dadurch gekennzeichnet, dass** das quellfähige Material ausgewählt ist aus natürlichen Polymeren, synthetischen Polymeren, mineralischen Substanzen und deren Mischung, vorzugsweise natürlichen und synthetische Polymere sowie deren Mischungen, bevorzugt synthetischen Polymeren.

8. Kompositmaterial nach Anspruch 7, **dadurch gekennzeichnet, dass** das synthetische Polymer ausgewählt aus (Meth)acrylaten, Poly(meth)acrylsäure, Salzen der Poly(meth)-acrylsäure, Polyacrylamid, Polyalkoholen sowie deren Co- und Terpolymeren und Mischungen.

9. Kompositmaterial nach einem der vorangehenden Ansprüche, **dadurch gekennzeichnet, dass** das quellfähige Material ein superabsorbierendes Polymer ist.

10. Verwendung eines Kompositmaterials, insbesondere von Kompositpartikeln, nach deinem der Ansprüche 1 bis 9 in Beschichtungen, insbesondere in Fassadenbeschichtungen, Korrosionsschutzbeschichtungen, Anti-Eis-Beschichtungen und/oder in Holzschutzbeschichtungen.

11. Verfahren zur Herstellung eines Kompositmaterials, insbesondere von Kompositpartikeln, **dadurch gekennzeichnet, dass**
(a) in einem ersten Verfahrensschritt ein poröses Trägermaterial vorgelegt wird und
(b) in einem auf den ersten Verfahrensschritt (a) folgenden zweiten Verfahrensschritt ein quellfähiges Material in den Poren des porösen Trägermaterials gebildet wird,
wobei das poröse Trägermaterial ein mineralischer Füllstoff oder eine Mischung von mineralischen Füllstoffen ist.

12. Verfahren nach Anspruch 11, **dadurch gekennzeichnet, dass** in Verfahrensschritt (a) das poröse Trägermaterial in loser Schüttung oder als Dispersion vorgelegt wird.

13. Verfahren nach Anspruch 11 oder 12, **dadurch gekennzeichnet, dass** in Verfahrensschritt (b) Präkursoren des quellfähigen Materials in flüssiger Form zu dem porösen Trägermaterial hinzugegeben werden, insbesondere als Lösung oder Dispersion.

## Claims

1. Composite material, in particular switchable functional material, preferably composite particles, comprising
(a) a porous carrier material, in particular porous particles, and
(b) a swellable material,
wherein the pores of the porous carrier material contain the swellable material,
wherein the porous carrier material is a mineral filler or a mixture of mineral fillers,
wherein the porous carrier material has a predominantly open pore system, and
wherein the swellable material is formed in the pores of the porous carrier material.

2. Composite material according to claim 1, **characterized in that** the composite material is particulate matter.

3. Composite material according to one of the preceding claims, **characterized in that** the porous carrier material comprises an open pore system.

4. Composite material according to one of the preceding claims, **characterized in that** the mineral filler is selected from silicas, in particular fumed silicas, xerogels, in particular silica gels, diatomaceous earth, zeolites, aerogels, tuff, expanded clay, vermiculite and further layered silicates, in particular bentonite and/or kaolinite, and mixtures thereof.

5. Composite material according to claim 4, **characterized in that** the mineral filler is selected from silicas, in particular fumed silica, silica gels, diatomaceous earth and mixtures thereof, preferably fumed silica, silica gels and mixtures thereof.

6. Composite material according to one of the preceding claims, **characterized in that**
the volume of the swellable material increases during the swelling process, relative to the volume of the non-swollen swellable material, at least by a factor of 0.5, in particular at least by a factor of 1, preferably at least by a factor of 2, more preferably at least by a factor of 3, and/or
**in that** the volume of the swellable material, relative to the volume of the non-swollen swellable material, increases by a factor of 0.5 to 10, in particular 1 to 8, preferably 2 to 7, more preferably 3 to 6, during the swelling process.

7. Composite material according to one of the preceding claims, **characterized in that** the swellable material is selected from natural polymers, synthetic polymers, mineral substances and mixtures thereof, preferably natural and synthetic polymers and mixtures thereof, more preferably synthetic polymers.

8. Composite material according to claim 7, **characterized in that** the synthetic polymer is selected from (meth)acrylates, poly(meth)acrylic acid, salts of poly(meth)acrylic acid, polyacrylamide, polyalcohols and their co- and terpolymers and mixtures.

9. Composite material according to any of the preceding claims, **characterized in that** the swellable material is a superabsorbent polymer.

10. Use of a composite material, in particular of composite particles, according to claims 1 to 9 in coatings, in particular in facade coatings, corrosion protection coatings, anti-ice coatings and/or in wood protection coatings.

11. Process for the production of a composite material, in particular composite particles, **characterized in that**,
(a) in a first process step, a porous carrier material is provided and
(b) in a second process step following the first process step (a), a swellable material is formed in the pores of the porous carrier material.
wherein the porous carrier material is a mineral filler or a mixture of mineral fillers.

12. Process according to claim 11, **characterized in that** in process step (a) the porous carrier material is provided in bulk or as a dispersion.

13. Process according to claim 11 or 12, **characterized in that** in process step (b) precursors of the swellable material are added in liquid form to the porous carrier material, in particular as a solution or dispersion.

## Revendications

1. Matériau composite, en particulier matériau fonctionnel commutable, de préférence particules composites, comportant
(a) un substrat poreux, en particulier des particules poreuses, et
(b) un matériau gonflable,
les pores du substrat poreux contenant le matériau gonflable,
le substrat poreux étant une charge minérale ou un mélange de charges minérales,
le substrat poreux comportant un système de pores majoritairement ouverts, et
le matériau gonflable étant formé dans les pores du substrat poreux.

2. Matériau composite selon la revendication 1, **caractérisé en ce que** le matériau composite est particulaire.

3. Matériau composite selon l'une quelconque des revendications précédentes, **caractérisé en ce que** le substrat poreux comporte un système de pores ouverts.

4. Matériau composite selon l'une quelconque des revendications précédentes, **caractérisé en ce que** la charge minérale est choisie parmi les acides siliciques, en particulier les silices pyrogénées, les xérogels, en particulier les gels de silice, la terre de diatomée, les zéolites, les aérogels, le tuffeau, l'argile expansée, la vermiculite et autres phyllosilicates, en particulier la bentonite et/ou la kaolinite ainsi que leurs mélanges.

5. Matériau composite selon la revendication 4, **caractérisé en ce que** la charge minérale est choisie parmi les acides siliciques, en particulier la silice pyrogénée, les gels de silice, la terre de diatomée et leurs mélanges, de préférence la silice pyrogénée, les gels de silice et leurs mélanges.

6. Matériau composite selon l'une quelconque des revendications précédentes, **caractérisé en ce que**
le volume du matériau gonflable pendant le processus de gonflement, rapporté au volume du matériau gonflable non gonflé, augmente d'au moins un facteur de 0,5, en particulier d'au moins un facteur de 1, de préférence d'au moins un facteur de 2, de préférence d'au moins un facteur de 3 et/ou
**en ce que** le volume du matériau gonflable, rapporté au volume du matériau gonflable non gonflé, augmente pendant le processus de gonflement d'au moins un facteur de 0,5 à 10, en particulier de 1 à 8, de préférence de 2 à 7, de préférence de 3 à 6.

7. Matériau composite selon l'une quelconque des revendications précédentes, **caractérisé en ce que** le matériau gonflable est choisi parmi les polymères naturels, les polymères synthétiques, les substances minérales et leur mélange, de préférence les polymères naturels et synthétiques ainsi que leurs mélanges, de préférence les polymères synthétiques.

8. Matériau composite selon la revendication 7, **caractérisé en ce que** le polymère synthétique est choisi parmi les (méth)acrylates, l'acide poly(méth)acrylique, les sels d'acide poly(méth)acrylique, le polyacrylamide, les polyols ainsi que leurs copolymères et terpolymères et mélanges.

9. Matériau composite selon l'une quelconque des revendications précédentes, **caractérisé en ce que** le matériau gonflable est un polymère superabsorbant.

10. Utilisation d'un matériau composite, en particulier de particules composites, selon l'une quelconque des revendications 1 à 9 dans des revêtements, en particulier dans des revêtements de façade, des revêtements anticorrosion, des revêtements antigel et/ou dans des revêtements xyloprotecteurs.

11. Procédé de production d'un matériau composite, en particulier de particules composites, **caractérisé en ce que**
(a) dans une première étape de procédé, un substrat poreux est produit et
(b) dans une seconde étape de procédé suivant la première étape de procédé (a), un matériau gonflable est formé dans les pores du substrat poreux,
le substrat poreux étant une charge minérale ou un mélange de charges minérales.

12. Procédé selon la revendication 11, **caractérisé en ce que** dans l'étape de procédé (a), le substrat poreux est produit en vrac ou sous forme de dispersion.

13. Procédé selon la revendication 11 ou 12, **caractérisé en ce que** dans l'étape de procédé (b), des précurseurs du matériau gonflable sont ajoutés sous forme liquide au substrat poreux, en particulier sous forme de solution ou de dispersion.
